(19) Europäisches Patentamt
European Patent Office
Office européen des brevets

(11) **EP 2 532 621 A1**

(12) **EUROPEAN PATENT APPLICATION**
published in accordance with Art. 153(4) EPC

(43) Date of publication:
**12.12.2012 Bulletin 2012/50**

(51) Int Cl.:
**C01B 13/14** (2006.01)   **C25D 11/26** (2006.01)
**A61K 6/00** (2006.01)   **A61L 27/00** (2006.01)
**C01G 23/04** (2006.01)   **C01G 25/02** (2006.01)

(21) Application number: **11737125.2**

(22) Date of filing: **27.01.2011**

(86) International application number:
**PCT/JP2011/051672**

(87) International publication number:
**WO 2011/093414 (04.08.2011 Gazette 2011/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.01.2010 JP 2010015963**

(71) Applicant: **National University Corporation
Tokyo Medical and Dental University
Bunkyo-ku
Tokyo 113-8510 (JP)**

(72) Inventors:
• **YAMASHITA, Kimihiro**
  **Tokyo 113-8510 (JP)**
• **NAGAI, Akiko**
  **Tokyo 113-8510 (JP)**
• **MA, Chufan**
  **Tokyo 113-8510 (JP)**

(74) Representative: **von Kreisler Selting Werner
Deichmannhaus am Dom
Bahnhofsvorplatz 1
50667 Köln (DE)**

(54) **METAL OXIDE, METAL MATERIAL, BIOCOMPATIBLE MATERIAL, AND METHOD FOR PRODUCING METAL OXIDE**

(57) Disclosed is a crystalline metal oxide having a positive charge-induced region and a negative charge-induced region, which has a surface which has protrusions and recesses or a porous surface. The metal which configures the metal oxide is preferably an elemental metal or an elemental metal-containing alloy such as titanium, zirconium, titanium alloy, zirconium alloy or cobalt chromium alloy. The metal oxide is preferably one obtained by an anodic oxidation treatment of the metal which configures the metal oxide and the metal oxide can be suitably used as a biocompatible material or a member constituting a biocompatible material.

## Description

Technical Field

The present invention relates to a metal oxide, a metal material, a biocompatible material and a method of producing a metal oxide.

Background Art

An inorganic material having a hydrophilized surface has an improved adhesion and cohesion with a variety of members that are in contact with the inorganic material. Therefore, it has been known to impart rigidity and durability to a soft or fragile member by using an inorganic material having a hydrophilized surface as a substrate or column support and making the member to adhere to the surface of the inorganic material.
For example, metal base materials on which a ceramic coat such as hydroxyapatite is disposed are employed as the inorganic material in artificial bones and dental implants (see, for example, Patent Documents 1 to 3). The ceramic coat of a metal base material of an artificial bone or dental implant can be subjected to a hydrophilization treatment so as to facilitate growth of living cells on the surface of the ceramic coat so that a variety of tissues and cells are regenerated when the artificial bone or dental implant is implanted into a living body.

Polarization of ceramic has been disclosed as a hydrophilization treatment of a ceramic coat (see, for example, Patent Documents 1 to 4). It has been also known to hydrophilize a metal surface by subjecting the surface of the metal base material itself to anodic oxidation. For example, Patent Document 5 discloses using a metal substrate as a metal base material, forming a titanium oxide on the surface of the metal substrate, and forming a vast number of fine pores in the thus formed titanium oxide coat to make the titanium oxide coat be porous, so that the contact angle between the metal substrate and water is adjusted to 20° or less.

Prior Art Documents

Patent Documents

[Patent Document 1] Japanese Patent Application Publication (JP-A) No. 2001-187133
[Patent Document 2] JP-A No. 2002-335947
[Patent Document 3] JP-A No. 2003-300712
[Patent Document 4] JP-ANo. 10-324584
[Patent Document 5] JP-A No. 11-43799

SUMMARY OF INVENTION

Technical Problem

However, a layered structure in which a ceramic coat is disposed on a metal base material has a low coating strength to detach the ceramic coat easily therefrom due to the differences in the thermal expansion coefficient and crystal structure between the metal base material and the ceramic coat. Further, the metal surface is not sufficiently activated in the method disclosed in the Patent Document 5. It is desired in the applications of biocompatible materials such as artificial bones and dental implants that regeneration, growth and the like of living cells such as osteoblast be progress quickly in a shorter period. Therefore, superior hydrophilic performance with which regeneration and growth of living cells are facilitated is demanded.

In view of the above-described circumstances, the present invention aims to provide a metal oxide having excellent hydrophilicity; a metal material having a high coating strength and excellent hydrophilicity; a biocompatible material having a high coating strength and excellent hydrophilicity as well as good adhesion and growing ability for living cells; and a method of producing a metal oxide by which excellent hydrophilicity is attained. Solution to Problem

Specific means for achieving the object are as follows.
<1> A crystalline metal oxide comprising a positive charge-induced region and a negative charge-induced region, a surface of the crystalline metal oxide having protrusions and recesses or being porous.

<2> The metal oxide according to <1>, wherein a metal which configures the metal oxide is an elemental metal or an elemental metal-containing alloy

<3> The metal oxide according to <2>, wherein the metal which configures the metal oxide is titanium, zirconium, titanium alloy, zirconium alloy or cobalt chromium alloy.

<4> The metal oxide according to <2> or <3>, wherein the metal which configures the metal oxide is oxidized by an anodic oxidation treatment.

<5> A metal material comprising the metal oxide of any one of <1> to <4> on at least a part of the surface of a metal.

<6> The metal material according to <5>, wherein the metal and the metal which configures the metal oxide are the same metal.

<7> The metal material according to <5> or <6>, wherein the metal oxide is an oxide coat formed on the surface of the metal.

<8> A biocompatible material, which contains the metal oxide according to any one of <1> to <4> or the metal material according to any one of <5> to <7>.

<9> A method of producing a metal oxide, the method comprising: a metal oxide formation step in which a metal is oxidized to form a metal oxide on at least a part of the metal; and a polarization step in which the metal oxide is polarized by disposing the metal oxide between a first electrode which functions as a positive electrode and a second electrode which functions as a negative electrode and applying thereto a voltage so that a positive charge-induced region and a negative charge-induced region are formed on the metal oxide.

<10> The method of producing a metal oxide according to <9>, wherein a metal is oxidized by microarc anodic oxidation treatment in the metal oxide formation step.

<11> The method of producing a metal oxide according to <9> or <10>, which produces a crystalline metal oxide having a surface having protrusions and recesses or a porous surface.

<12> The method of producing a metal oxide according to any one of <9> to <11>, in the polarization step, a voltage is applied to the first electrode and the second electrode with the metal oxide being not in contact with at least one of the first electrode or the second electrode, such that an electric field gradient of 0.5 kV/cm or more is formed between the first electrode and the second electrode.

<13> The method of producing a metal oxide according to <9> to <12>, wherein, in the polarization step, the metal oxide is not in contact with one of the first electrode and the second electrode and the metal is in contact with the other electrode.

<14> The method of producing a metal oxide according to any one of <9> to <13>, wherein the metal is an elemental metal or an elemental metal-containing alloy.

<15> The method of producing a metal oxide according to any one of <9> to <14>, wherein the metal is titanium, zirconium, titanium alloy, zirconium alloy or cobalt chromium alloy

Effects of the Invention

According to the present invention, a metal oxide having excellent hydrophilicity; a metal material having a high coating strength and excellent hydrophilicity; a biocompatible material having a high coating strength and excellent hydrophilicity as well as good adhesion and growing ability for living cells; and a production method of a metal oxide by which excellent hydrophilicity is attained, can be provided.

BRIEF DESCRIPTION OF DRAWINGS

Fig. 1 is a schematic diagram showing an example of the production method of a metal oxide according to the invention.

Fig. 2 is a schematic diagram showing another example of the production method of a metal oxide according to the invention.

Fig. 3A is a SEM image of a titanium oxide-coated disk which was subjected to a MAO treatment at a voltage of 350 V; Fig. 3B is a SEM image of a titanium oxide-coated disk which was subjected to a MAO treatment at a voltage of 400 V; and Fig. 3C is a SEM image of a titanium oxide-coated disk which was subjected to a MAO treatment at a voltage of 450 V.

Fig. 4 is a SEM image of a titanium oxide-coated disk which was subjected to a MAO treatment at a voltage of 400 V.

Fig. 5 is an EDX spectrum of a titanium oxide-coated disk.

Fig. 6 is an XRD spectrum of a titanium oxide-coated disk.

Fig. 7 is a TSDC spectrum of a polarized titanium oxide-coated disk having an N-surface, which was subjected to a MAO treatment at a voltage of 400 V.

Fig. 8 is a TSDC spectrum of a polarized titanium oxide-coated disk having an N-surface, which was subjected to a MAO treatment at a voltage of 450 V.

Fig. 9 is a SEM image of a SBF-immersed titanium oxide-coated disk having an O-surface, which was subjected to a MAO treatment at a voltage of 350 V; Fig. 9B is a SEM image of a SBF-immersed titanium oxide-coated disk having an O-surface, which was subjected to a MAO treatment at a voltage of 400 V; and Fig. 9C is a SEM image of a SBF-immersed titanium oxide-coated disk having an O-surface, which was subjected to a MAO treatment at a voltage of 450 V.

Fig. 10A is a SEM image of a SBF-immersed titanium oxide-coated disk having an N-surface, which was subjected to a MAO treatment at a voltage of 350 V; Fig. 10B is a SEM image of a SBF-immersed titanium oxide-coated disk having an N-surface, which was subjected to a MAO treatment at a voltage of 400 V; and Fig. 10C is a SEM image of a SBF-immersed titanium oxide-coated disk having an N-surface, which was subjected to a MAO treatment at a voltage of 450 V.

Fig. 11 is a SEM image of a SBF-immersed titanium oxide-coated disk having an N-surface, which was subjected to a MAO treatment at a voltage of 400 V.

Fig. 12A is a SEM image of a SBF-immersed titanium oxide-coated disk having a P-surface, which was subjected to a MAO treatment at a voltage of 350 V; Fig. 12B is a SEM image of a SBF-immersed titanium oxide-coated disk having a P-surface, which was subjected to a MAO treatment at a voltage of 400 V; and Fig. 12C is a SEM image of a SBF-immersed titanium oxide-coated disk having a P-surface, which was subjected to a MAO treatment at a voltage of 450 V.

Fig. 13A is a SEM image of a SBF-immersed titanium oxide-coated disk having an N-surface, which was subjected to a MAO treatment at a voltage of 400 V; and Fig. 13B is an EDX spectrum of a SBF-immersed polarized titanium oxide-coated diskhaving an N-surface (Example).

Fig. 14 is an XPS spectrum of a polarized titanium oxide-coated disk.

Fig. 15 is an XPS spectrum of a polarized titanium oxide-coated disk.

Fig. 16 is an XPS spectrum of a polarized titanium oxide-coated disk.

Fig. 17 is a bar graph showing the surface roughness [$\mu$m] of a titanium disk (Comparative Example), titanium oxide-coated disk (Comparative Example), UV-treated titanium disk (Comparative Example) and polarized titanium oxide-coated disk (Example).

Fig. 18 is a bar graph showing the contact angle (degree) of the surface of a titanium disk (Comparative Example), titanium oxide-coated disk (Comparative Example), UV-treated titanium disk (Comparative Example) and polarized titanium oxide-coated disk (Example).

Fig. 19A is a fluorescence micrograph of the surface of a titanium disk at 2 hours after MG63 cell adhesion and Fig. 19B is a fluorescence micrograph of the surface of a UV-treated titanium disk at 2 hours after MG63 cell adhesion.

Fig. 20A is a fluorescence micrograph of the surface of a non-polarized titanium oxide-coated disk having an O-surface at 2 hours after MG63 cell adhesion; Fig. 20B is a fluorescence micrograph of the surface of a polarized titanium oxide-coated disk having a P-surface at 2 hours after MG63 cell adhesion; and Fig. 20C is a fluorescence micrograph of the surface of a polarized titanium oxide-coated disk having an N-surface at 2 hours after MG63 cell adhesion.

Fig. 21 A is a fluorescence micrograph of the surface of a titanium disk at 4 hours after MG63 cell adhesion; and Fig. 21B is a fluorescence micrograph of the surface of a UV-treated titanium disk at 4 hours after MG63 cell adhesion.

Fig. 22A is a fluorescence micrograph of the surface of a non-polarized titanium oxide-coated disk having an O-surface at 4 hours after MG63 cell adhesion; Fig. 22B is a fluorescence micrograph of the surface of a polarized titanium oxide-coated disk having a P-surface at 4 hours after MG63 cell adhesion; and Fig. 22C is a fluorescence micrograph of the surface of a polarized titanium oxide-coated disk having an N-surface at 4 hours after MG63 cell adhesion.

Fig. 23 is a bar graph showing the absorbances obtained by MTT analyses (at after 4 hours) of a titanium disk, titanium oxide-coated disk, UV-treated titanium disk, non-polarized titanium oxide-coated disk having an O-surface, polarized titanium oxide-coated disk having a P-surface and polarized titanium oxide-coated disk having an N-surface.

Fig. 24 is a bar graph showing the absorbances obtained by MTT analyses (at after 24 hours) of a titanium disk, titanium oxide-coated disk, UV-treated titanium disk, non-polarized titanium oxide-coated disk having an O-surface, polarized titanium oxide-coated disk having a P-surface and polarized titanium oxide-coated disk having an N-surface.

Fig. 25A is an immunofluorescence micrograph of the surface of a non-polarized titanium oxide-coated disk having an O-surface at 1 hour after cell adhesion; Fig. 25B is an immunofluorescence micrograph of the surface of a polarized titanium oxide-coated disk having an N-surface at 1 hour after cell adhesion; and Fig. 25C is an immunofluorescence micrograph of the surface of a polarized titanium oxide-coated disk having a P-surface at 1 hour after cell adhesion.

Fig. 26A is an immunofluorescence micrograph of the surface of a non-polarized titanium oxide-coated disk having an O-surface at 3 hours after cell adhesion; Fig. 26B is an immunofluorescence micrograph of the surface of a polarized titanium oxide-coated disk having an N-surface at 3 hours after cell adhesion; and Fig. 26C is an immunofluorescence micrograph of the surface of a polarized titanium oxide-coated disk having a P-surface at 3 hours after cell adhesion.

Fig. 27 is a bar graph showing the change with time of cell growth on the surfaces of a non-polarized titanium oxide-coated disk having an O-surface, polarized titanium oxide-coated disk having an N-surface and polarized titanium oxide-coated disk having a P-surface.

Fig. 28 is a bar graph showing the ALP activities on the respective surfaces of a titanium disk, non-polarized titanium oxide-coated disk having an O-surface, UV-treated titanium disk, polarized titanium oxide-coated disk having a P-surface and non-polarized titanium oxide-coated disk having an N-surface.

Fig. 29 is a perspective photograph of a polarized titanium oxide-coated material (right) and metal titanium (left), which is raw material thereof.

Fig. 30 is a TSDC spectrum of a polarized titanium oxide-coated material.

Fig. 31 is a bar graph showing the results of drawing tests performed with a non-polarized titanium oxide-coated material having an O-surface, UV-treated titanium material, polarized titanium oxide-coated material having a P-surface and polarized titanium oxide-coated material having an N-surface.

Fig. 32A is a microCT analytical image which shows the polarized titanium oxide-coated material N4 implanted in a rabbit femur and the femur in the lengthwise direction of the cylinder part of the polarized titanium oxide-coated material N4; and Fig. 32B is a perspective microCT analytical image which shows the polarized titanium oxide-coated material N4 implanted in a rabbit femur and the femur.

Fig. 33 is a bar graph showing respective bone volumes [mm$^3$] in the perimeter (within a space that is between the material surface and 500 $\mu$m from the material surface) of a non-polarized titanium oxide-coated material having an O-surface, a UV-treated titanium material, a polarized titanium oxide-coated material having a P-surface and a polarized titanium oxide-coated material having an N-surface.

Fig. 34 is a bar graph showing respective bone volumes [mm$^3$] in the perimeter (within a space that is between 500 $\mu$m from the material surface and 1,500 $\mu$m from the material surface) of a non-polarized titanium oxide-coated material having an O-surface, a UV-treated titanium material, a polarized titanium oxide-coated material having a P-surface and a polarized titanium oxide-coated material having an N-surface.

Fig. 35 is a SEM image of a non-polarized cobalt chromium alloy oxide-coated disk having an O-surface.

Fig. 36 is a SEM image of a polarized cobalt chromium alloy oxide-coated disk having an N-surface.

Fig. 37 is a SEM image of a polarized cobalt chromium alloy oxide-coated disk having a P-surface.

Fig. 38 shows XPS spectra of a non-polarized and a polarized cobalt chromium alloy oxide-coated disks.

DESCRIPTION OF EMBODIMENTS

The metal oxide according to the invention is a metal oxide having a positive charge-induced region and a negative charge-induced region.

By putting a metal oxide at a position between a first electrode which functions as a positive electrode and a second electrode which functions as a negative electrode and applying a voltage thereto, the positive charge and negative change are separated into the positive charge-induced region and negative charge-induced region respectively (that is, the metal oxide is polarized). By polarizing the metal oxide in this manner, the metal oxide becomes to express affinity to water, that is, hydrophilicity. This is thought to be because polarization of the metal oxide leads to formation of a large number of "metal-OH" groups on the surface of the metal oxide, which results an environment where the groups easily form hydrogen bonds with water molecules.

Valve metals such as titanium and zirconium are suitable as a metal which configures the metal oxide.

Ceramic film-coated materials having a polarized ceramic film coated on a metal surface have been known as conventional metal materials having a hydrophilic surface. However, as described above, the ceramic coat is easily detached therefrom due to the differences between the ceramic coat and the metal in terms of the expansion coefficient, crystal structure and the like. On the other hand, the metal oxide is formed as an oxide coat on a metal surface by oxidation of a metal. Accordingly, the metal oxide hardly detaches from the metal, so that a metal material having high coating strength can be attained.

It is thus thought that a metal material which has a metal oxide coat having a positive charge-induced region and a negative charge-induced region as a metal oxide coat formed on a metal surface has excellent hydrophilicity as well as high coating strength.

A polarization treatment of a metal oxide is generally performed applying a voltage to the metal oxide by using two electrodes; however, since a metal itself easily conducts electricity, there are cases where a metal material becomes electrified when applied with a voltage in contact with two electrodes and thus the metal material cannot be polarized. However, according to the non-contact-type polarization method described below, that is, a method in which a voltage is applied to the first electrode and the second electrode with a metal oxide being not in contact with at least one of the first electrode or the second electrode such that an electric field gradient of 0.5 kV/cm or more is formed between the first electrode and the second electrode, a metal oxide coat can be polarized without electrification even when a metal is exposed on the metal material surface.

Further, according to the non-contact-type polarization method, even in cases where the surface of metal oxide coat is deformed to have projections and recesses, depressions and the like, a polarization treatment can be performed without producing electrodes having such projections and recesses.

The metal oxide, metal material, biocompatible material and production method of a metal oxide according to the invention will now be described in detail.

<Metal oxide>

The metal oxide according to the invention is a metal oxide having a positive charge-induced region and a negative charge-induced region.

The metal oxide is not particularly restricted as long as it is a compound obtained by oxidation of a metal. Examples thereof include iron oxide, copper oxide, aluminum oxide, silicon oxide, titanium oxide and zirconium oxide. A metal which configures the metal oxide is not limited to elemental metals such as the above-described iron, copper, titanium and zirconium and may be a known metal such as an alloy containing such elemental metals (for example, titanium alloy, zirconium alloy and cobalt chromium alloy) or a stainless steel.

Specific examples of the above-described metal used in cases where a metal material having a polarized metal oxide on the surface is utilized as a biological material for use in a living body such as artificial bone, artificial tooth root or bone fracture fixation material include stainless steels such as SUS316L, Co-Cr alloys, COP alloy (Fe-20Cr-20Ni-20Co-4Mo-0.2P[unit: % by mass]), titanium and titanium alloys such as Ti-Al-V alloys and Ti-Al-Nb alloys.

In embodiments, a stent, which is a reticulated cylindrical metal for expanding a tubular part of a human body represented by blood vessel from inside the lumen, may be employed as the metal which configures the metal oxide.

Among the metals which configures the metal oxide, a metal which easily forms a metal oxide is preferable and a valve metal is particularly preferable. A "valve metal" is a metal which exhibits excellent corrosion resistance when the surface thereof is uniformly covered with an oxide coat of the metal by anodic oxidation, the oxide coat conducting an electric current only in one direction and hardly conducting in the opposite direction. Examples of the valve metal include aluminum, tantalum, niobium, titanium, hafnium, zirconium, zinc, tungsten, bismuth and antimony.

Among these valve metals, from the viewpoint of the biocompatibility, it is preferable to use titanium or zirconium.

The shape of the metal oxide according to the invention is not particularly restricted and the metal oxide may be in the form of, for example, a plate shape, a thin film shape, a disk shape, a polyhedron shape, a cylinder shape or a particle shape.

In cases where the metal oxide is a particle, the average particle diameter thereof may be, for example, from 0.1 $\mu$m to 1,000 $\mu$m, preferably from 1 $\mu$m to 500 $\mu$m, more preferably from 10 $\mu$m to 300 $\mu$m. The average particle diameter can be measured by, for example, microscopy, an optical-scanning method or a laser diffraction scattering method. In embodiments, the metal oxide particle may be a porous particle.

In embodiments, the metal oxide may be one having a complex shape of an artificial bone, artificial tooth root or the like that can be utilized as a substitute member for a bone forming the skeleton of a human or animal.

Here, in cases where the metal oxide is utilized as a biological material, particularly as an artificial bone, the metal oxide is required to quickly form a strong connection with living tissue in the body. From such a viewpoint, it is preferable that the surface of the metal oxide has such a roughness that is in the range of from one attained by a roughening treatment with sand blasting (central average roughness (Ra) of about 1 $\mu$m) to one in which protrusions and recesses having a difference in height of about 5 mm are formed. Further, from the similar viewpoint, it is also one of the preferable embodiments that the metal oxide is porous at its surface.

- Method of producing Metal oxide-

A metal oxide can be produced by placing a metal in an oxygen environment to oxidize the meta. In the invention, it is preferable that a metal oxide be produced by a proactive oxidation treatment such as a thermal oxidation method where a metal is heated in the air or an anodic oxidation method where electrolysis is performed in an electrolytic solution, not by oxidation occurring as a natural phenomenon where a metal is left in the air for oxidation. Further, in cases where a metal oxide is produced in the form of powder or particle, the production thereof may be performed by a known sol-gel method as well.

Among these methods, it is preferable that the oxidation of metal be performed by microarc anodic oxidation treatment (hereinafter, also referred to as "Microarc Oxidation (MAO) treatment") by which projections and recesses and pores are easily formed on the resulting metal oxide surface.

The microarc oxidation treatment is configured by discrete metal oxidation reactions accompanying spark discharge and the metal oxide formed thereby on the metal surface is crystalline. Since spark discharge allows the metal oxide surface have projections and recesses or be porous having uniform pores, the surface area of the resulting metal oxide can be increased substantially, so that the surface activity can be increased. Accordingly, the hydrophilicity of the metal oxide can be improved. Further, by making the metal oxide surface be with projections and recesses or uniformly porous, living cells easily attach thereto and hardly detach therefrom; therefore, a microarc oxidation treatment is preferable also from the viewpoint of using the resulting metal oxide for biological material applications.

In cases where the surface activity of a metal oxide is high, when the metal oxide according to the invention is used as a biocompatible material, biological proteins and the like may easily adsorb to the biocompatible material to cover the surface thereof, so that adhesion and growth of living cells such as osteoblast may become more likely to occur.

A MAO treatment is particularly suitable for oxidizing a valve metal. Oxidation of a metal other than valve metal, such as a stainless steel or a cobalt chromium alloy, does not have to be performed by a MAO treatment.

It is noted here that the details of the metal oxidation treatment method (e.g., electrolytic solution and conditions of oxidation treatment) and polarization treatment of metal oxide will be described later in more detail in the section "Production method of metal oxide".

<Metal material>

The metal material according to the invention has the above-described metal oxide of the invention on at least a part of the metal surface. That is, a metal oxide coat is formed in a part(s) or in the entire of the surface of the metal material.

The metal which configures the metal material of the invention (hereinafter, also referred to as "supporting metal") and the metal which configures the metal oxide formed on the surface of the supporting metal (hereinafter, also referred to as "coating metal") may be the same or different. For example, the metal material may be one that has an aluminum oxide coat formed on a supporting metal of titanium.

From the viewpoint of the coating strength, in the metal material according to the invention, it is preferable that the above-described metal and the above-described metal which configures the metal oxide be the same metal. In other words, it is preferable that the supporting metal and the coating metal be the same, that is, the metal material be in a state in which an oxide coat is formed by an oxidation of the metal surface. Examples of such metal material include a metal material in which a titanium oxide coat is formed on titanium which is a supporting metal.

In cases where the supporting metal and the coating metal are the same, examples of a method for forming an oxide coat on a metal include oxidation of a supporting metal by the thermal oxidation method or the anodic oxidation method. An oxidation treatment by the thermal oxidation method or the anodic oxidation method can attain a greater increase in the thickness of a metal oxide coat as compared to a case where the metal is left to stand in the air. Among these methods, from the viewpoints of improving the hydrophilicity and the ease of adhesion of living cells such as osteoblast, a microarc oxidation (MAO) treatment is preferable.

The thickness of the metal oxide coat formed on the metal surface is not particularly restricted and can be selected as appropriate in accordance with the use thereof. In cases where the metal material according to the invention is utilized as a biological material, the thickness is preferably in the range of preferably 1 $\mu$m to 100 $\mu$m, and more preferably 5 $\mu$m to 50 $\mu$m.

The shape of the metal material according to the invention is not particularly restricted and, as in the case of the metal oxide according to the invention, the metal material may be in the form of, for example, a plate shape, a thin film shape, a disk shape, a polyhedron shape, a cylinder shape or a particle shape.

In cases where the metal material is a particle, the average particle diameter thereof may be, for example, from 0.1 $\mu$m to 1,000 $\mu$m, preferably from 1 $\mu$m to 500 $\mu$m, and more preferably from 10 $\mu$m to 300 $\mu$m. The average particle diameter can be measured by, for example, microscopy, an optical-scanning method or a laser diffraction scattering method. In embodiments, the metal oxide particle may be a porous particle.

In embodiments, the metal material may be one which has a complex shape of an artificial bone, artificial tooth root or the like that can be utilized as a substitute member for a bone forming the skeleton of a human or animal.

In cases where the metal material is utilized as a biological material, particularly as an artificial bone, the metal material is desired to quickly form a strong connection with living tissue in the body. From such a viewpoint, it is preferable that the metal oxide surface of the metal material have such a roughness that is in the range of from one attained by a roughening treatment with sand blasting (central average roughness (Ra) of about 1 $\mu$m) to one in which protrusions and recesses having a difference in height of about 5 mm are formed. From the similar viewpoint, it is also one of the preferable embodiments that the metal oxide surface of the metal material is porous.

The use of the metal material according to the invention is not particularly restricted and it may be used in a variety of applications which improve the adhesion and cohesion of the surface of a metal oxide coat with other members in contact therewith and/or require hydrophilicity. Examples thereof include applications for anti-fogging, antibacterial action, water purification, or biological materials such as prostheses and artificial tooth roots. Among such applications, the metal material according to the invention is preferably used for biological material applications.

In the invention, the metal oxide has superior hydrophilicity and high surface activity due to a polarization treatment. It is thought as a reason that the metal oxide and metal material of the invention present no harm and have high compatibility with a living body when they are used as a biological material and incorporated into the living body.

<Biocompatible material>

The biocompatible material according to the invention contains the metal oxide or the metal material of the invention. That is, the biocompatible material according to the invention may be configured only by the metal oxide or the metal material of the invention, or may be a composite material in which the metal oxide or the metal material of the invention is mixed with a biocompatible macromolecular compound and/or a liquid medium.

The biocompatible material according to the invention contains the metal material of the invention which has excellent coating strength and hydrophilicity. It is thought as a reason that living cells such as osteoblast would easily regenerate on the metal oxide surface and growth of living cells would be thus attained in a shorter period when the biocompatible material is implanted into a living body.

Therefore, the biocompatible material according to the invention is particularly suitable for applications such as dental implants (artificial tooth roots) and orthopedic implants.

A composite material in which the metal oxide of the invention is mixed with a biocompatible macromolecular compound and/or a liquid medium will now be described.

The biocompatible material which contains a polarized metal oxide as well as a biocompatible macromolecular compound and/or a liquid medium may further contain, as required, other component(s) such as an inorganic salt such as sodium chloride, calcium chloride, sodium phosphate, or sodium carbonate and fine particles of a non-polarized ceramic (e.g., a calcium phosphate compound).

In this case, the biocompatible material according to the invention has a configuration in which the polarized metal oxide particle and the above-described other component(s) used as required are dissolved or dispersed in the biocompatible macromolecular compound and the liquid medium.

As for the ratio of the polarized metal oxide particle and the biocompatible macromolecular compound in the biocompatible material according to the invention, for example, the amount of the polarized metal oxide particle may be from 1 to 500 parts by mass, from 5 to 100 parts by mass, or from 10 to 50 parts by mass, with respect to 100 parts by mass of the biocompatible macromolecular compound. The liquid medium may be used in an amount of from 1 to 5,000 parts by mass, from 10 to 1,000 parts by mass, or from 100 to 500 parts by mass, with respect to 100 parts by mass of the total mass of the polarized metal oxide particle and the biocompatible macromolecular compound. The amount of the above-described other component used as required may be, when used, from 1 to 100 parts by mass with respect to 100 parts by mass of the total mass of the polarized metal oxide particle and the biocompatible macromolecular compound. Here, in cases where two or more of the above-described other components are used, they may be used in combination as appropriate such that their total mass becomes from 1 to 100 parts by mass with respect to 100 parts by mass of the total mass of the polarized metal oxide particle and the biocompatible macromolecular compound.

In the invention, the term "biocompatible macromolecular compound" refers to a macromolecular compound which, when applied to a living body, does not provide an adverse effect, such as a strong inflammatory response, on a surface of the body or in the body.

Examples of macromolecular compound which can be used in the biocompatible material according to the invention include naturally-occurring macromolecular compounds such as fibroin, agarose, collagen, chitosan, glycosaminoglycan, hyaluronic acid, chondroitin sulfate, alginic acid, starch, pectin and pectic acid, as well as synthetic macromolecular compounds exhibiting bioabsorbability such as polyvinyl alcohols, polyethylene glycols, polymethyl methacrylates, methacrylic acid ester polymers, silicone resins, polylactic acids, polyglycolic acids and poly-$\varepsilon$-caprolactones. Such macromolecular compounds may be used individually, or two or more thereof may be used in combination. Further, such macromolecular compounds have a weight average molecular weight (Mw) of, for example, from 5,000 to 1,000,000, from 10,000 to 500,000, or from 20,000 to 100,000.

Examples of liquid medium which can be used in the biocompatible material according to the invention include water, ethanol, synthetic body fluid, physiological saline and mixtures thereof.

The biocompatible material according to the invention containing a polarized metal oxide particle can be prepared by, foe example, mixing the polarized metal oxide particle with a biocompatible macromolecular compound as well as other component(s) used as required and a liquid medium at an optimum mixing ratio. Although it depends on, for example, the amount of the liquid medium and the type and amount of the biocompatible macromolecular compound, the biocompatible material according to the invention can be prepared in the form of a suspension, gel, paste or the like.

The biocompatible material according to the invention, which is composed of a biocompatible macromolecular compound in which a polarized metal oxide particle is dispersed, exhibits excellent biocompatibility and because of the presence of a polarized metal oxide particle, has excellent cell-activating effect. Therefore, for treatment purposes and the like, the biocompatible material according to the invention can be applied to a damaged or tissue-defect site on the surface or inside of a living body.

For example, the biological material according to the invention can be used by applying it to a wound site on the body surface or by an appropriate method such as injection to a tissue-defect site. Further, by activating the cells in the application site and therearound, the cells are allowed to differentiate and proliferate, so that tissue generation can be promoted.

Further, since the biocompatible material according to the invention is capable of stimulating and activating cells, the biocompatible material is expected to provide a skin aging-suppressing effect (anti-aging effect), such as removal of wrinkles via activation of cutaneous keratinocytes and/or subcutaneous fibroblasts, by applying it to a skin. In addition, if melanocytes were activated, an effect similar to that obtained by a tanning salon can be expected to be safely attained without exposure to ultraviolet rays (cosmetic effect).

The effects of the biocompatible material according to the invention on a living body can be evaluated by, for example, one of the following methods (i) to (v):

(i) The biocompatible material according to the invention is applied or transplanted (treatment of skin ulcer and burn injury) or subcutaneously injected (soft tissue formation) to a dorsal skin-defect site of a rat. Using this, histological quantification of the absorption rate, biocompatibility, ingression of newly-formed blood vessels and/or condition of soft tissue substitution is performed;

(ii) A rat sciatic nerve entrapment model is used. The biocompatible material according to the invention is injected in the periphery of a nerve entrapment site and histological observation of nerve regeneration and functional evaluations are performed over time (promotion of damaged nerve regeneration). Similarly, a sciatic nerve-defect model is prepared, the biocompatible material according to the invention is immobilized on an artificial nerve and bridge-grafted, and the nerve regeneration-inducing capacity beyond the nerve-defect site is evaluated (bridgening of nerve-defect site). Alternatively, the biocompatible material according to the invention is injected in the periphery of the sciatic nerve of a spontaneously diabetic rat to perform the similar evaluation (treatment of polyneuropathy);

(iii) A bone marrow abrasion model is prepared by boring out femur bone marrow of a rat and the biological material according to the invention is injected thereto to observe the bone regeneration process and measurement of the bone mass using $\mu$CT and histological manners (filling of bone-defect);

(iv) The biocompatible material according to the invention is injected to the periphery of the carotid artery of a spontaneously arteriosclerotic rat to measure the cerebral blood flow using functional MRI or MRI angio (promotion of regeneration of vascular endothelium and damaged blood vessel); and

(v) Various cells are cultured on a petri dish containing the biocompatible material according to the invention to measure the differentiation and growth of the cells and gene expression levels of various cytokines (effects on cells at a genetic level).

<Method of producing Metal oxide>

The method of producing a metal oxide according to the invention includes a metal oxide formation step in which a metal is oxidized to form a metal oxide on at least a part of the metal; and the polarization step in which the metal oxide is disposed between a first electrode which functions as a positive electrode and a second electrode which functions as a negative electrode and a voltage is applied thereto to form a positive charge-induced region and a negative charge-induced region on the metal oxide, thereby polarizing the metal oxide.

In view of surface modification of the metal oxide, the production method may further include mechanical processing and/or chemical processing.

[Metal oxide formation step]

In the metal oxide formation step, a metal is oxidized to form a metal oxide.

As described above, examples of the method of oxidizing a metal include thermal oxidation methods and anodic oxidation methods and thereamong, an oxidation treatment by microarc anodic oxidation (MAO treatment) is preferable from the viewpoint of attaining modification of the resulting metal oxide surface. Here, MAO treatment, which is one of the preferable embodiments of the invention, is described in detail.

-MAO treatment-

MAO treatment can be performed by, for example, using a metal plate to be oxidized as an anode and a stainless steel plate as a cathode, immersing them in an electrolytic bath containing an electrolytic solution and then applying a voltage thereto.

Examples of a material used as the cathode include, in addition to stainless steel plates, high-density carbons and the like. Among these, a stainless steel plate is preferable.

One of the advantages of MAO treatment is that, as described in the above, the metal oxide surface can be made porous and the hydrophilicity can be thus improved. Another advantage is that Ca ions and P ions can be incorporated into the metal oxide by regulating the formulation and the concentration of electrolytes. In cases where the metal oxide or the metal material according to the invention is used as a biological material, it is preferable that regeneration and growth of osteoblasts and the like that are in contact with the metal oxide surface be performed quickly, and by incorporating Ca ions and P ions into the metal oxide, regeneration and growth of osteoblasts and the like can be expected to be accelerated.

Examples of the electrolytic solution include an acid solution such as sulfuric acid or phosphoric acid, an alkaline solution such as calcium hydroxide or sodium hydroxide, and an electrolytic solution containing calcium and a phosphoric acid salt. Thereamong, from the viewpoint that Ca ions and P ions can be incorporated into the metal oxide, an electrolytic solution containing calcium and a phosphoric acid salt can be preferably used.

Specific examples of the electrolytic solution containing calcium and a phosphoric acid salt include calcium acetate and calcium glycerophosphate.

Further, the electrolyte concentration thereof is preferably from 0.01 mol/L to 1 mol/L.

The voltage applied to the electrolytic bath is preferably from 100 V to 600V, although it depends on the metal to be oxidized.

In cases where the metal to be oxidized is titanium, the voltage is preferably from 250 V to 400 V. In cases where the metal to be oxidized is zirconium, the voltage is preferably from 100 V to 400V.

The duration of the voltage application (that is, the duration of the oxidation treatment) is usually 0.5 second to 20 minutes, although it varies depending on the thickness of the intended metal oxide coat and the like. The longer the duration of the voltage application, the thicker the oxide coat becomes; therefore, it is also possible to make a whole metal into metal oxide.

Since the ionization degree of electrolytes is also temperature-dependent, the temperature inside the electrolytic bath (that is, the electrolyte temperature) is preferably from room temperature to 40°C.

[Polarization step]

In the polarization step, the metal oxide obtained in the oxidation treatment step is disposed between the first electrode which functions as a positive electrode and the second electrode which functions as a negative electrode and a voltage is applied thereto.

When a metal oxide is placed in an electric field, the positive charge and negative charge in the metal oxide molecule move slightly in the direction of the electric field and the opposite direction thereof, respectively, and an electric charge appears on the metal oxide surface and inside the metal oxide near the surface. By removing the external electric field in this condition, the state of a large ionic displacement is maintained as is, so that a polarized metal oxide is obtained to have a region of induced negative charge (negative charge-induced region) and a region of induced positive charge (positive charge-induced region). In this manner, on the surface of a polarized metal oxide, the surface of the region of induced negative charge is referred to as "negative charge-induced surface (N-surface)" and the surface of the region of induced positive charge is referred to as "positive charge-induced surface (P-surface)".

Here, in order to place a metal oxide in an electric field, specifically, the metal oxide can be disposed between the first electrode which functions as a positive electrode and the second electrode which functions as a negative electrode, followed by application of a voltage thereto.

The conditions of the polarization treatment such as temperature and voltage will now be described.

The polarization treatment is normally performed at a constant temperature of room temperature (20°C) to 1,000°C. From the viewpoint of the ease of the operation, it is preferable that the polarization treatment be performed in a temperature range around room temperature.

Meanwhile, in cases where the polarization treatment is desired to be completed in a short period, a higher treatment temperature is preferable. In this case, the treatment temperature is preferably 200°C or less, more preferably 300°C or less. The upper limit of the treatment temperature may be any temperature as long as it is in the range where the metal oxide to be polarized and the metal material containing the metal oxide are not decomposed, destructed, oxidatively degraded or the like. For example, in cases where a metal oxide is the sole subject to be polarized, generally, the treatment temperature is preferably 500°C or less, more preferably 400°C or less.

The voltage to be applied in the polarization treatment is preferably 0.01 kV/cm to 20 kV/cm, although it depends on the metal oxide to be polarized.

In cases where the metal to be polarized is titanium oxide, the voltage is preferably from 1 kV/cm to 20 kV/cm. In cases where the metal to be polarized is zirconium oxide, the voltage is preferably from 0.01 kV/cm to 10 kV/cm.

The duration of the voltage application (duration of the polarization treatment) is usually from 10 minutes to 120 minutes. The longer the duration, the larger the accumulated charge can be obtained.

Examples of the electrodes used in the polarization treatment include platinum and stainless steel. In embodiments, platinum is preferable for biological materials. The electrodes used in the polarization treatment are generally in the form of a flat plate; however, it is preferable that the shape of the electrodes be in conformity with that of the metal oxide surface to be polarized.

The shape and mode of the metal oxide to be polarized are not particularly restricted and the metal oxide may be in the form of a plate, cylinder or particle, or may have a shape with a surface having protrusions and recesses or a porous surface. Further, the mode of the metal oxide to be polarized may be one in which, as in the case of a metal oxide partially formed on a metal surface, a metal oxide region and a metal region are present adjacent to each other.

The metal oxide is preferably polarized by the electrode non-contact polarization method described below in those cases where the shape of the electrodes for the polarization treatment cannot be adjusted to that of the metal oxide surface, such as when the surface of the metal oxide is a surface having protrusions and recesses or is porous and when the metal oxide is particulate, in those cases where the metal oxide region and the metal region are close to each other, and for those metal oxides which, although the metal thereof is covered with a metal oxide coat, becomes electrified when two electrodes are brought into contact and thus cannot be polarized.

-Electrode non-contact polarization-

"Electrode non-contact polarization" is a polarization method in which, in the polarization step of the method of producing a metal oxide according to the invention, a voltage is applied to the first and second electrodes with a metal oxide being not in contact with at least one of the first and second electrodes, such that an electric field gradient of 0.5 kV/cm or more is generated between the first and second electrodes.

In this manner, the polarization treatment is performed in a condition where at least one of the first electrode or the second electrode is disposed at a position not in contact with the metal oxide; therefore, polarization can be easily attained regardless of the shape of the metal oxide surface. In addition, in cases where it is desired to prevent contamination of the metal oxide surface caused by an electrode or in cases where a biological material already sterilized and then packaged (the biocompatible material according to the invention containing the metal oxide of the invention) is to be polarized, a polarization treatment can be performed by arranging the electrodes such that they are not in contact with the surfaces of other members.

Further, since it is not required to bring into contact at least one of the first electrode or the second electrode with a metal oxide, the method according to the invention can perform a polarization treatment without deformation of the metal oxide caused by a pressure applied thereon, and can perform a polarization treatment for a particulate metal oxide.

Here, the "non-contact" condition means that an electrode is not in a state of electrically in contact with a metal oxide and a metal material containing a metal oxide. Rhe distance between the electrode and a metal oxide or a metal material containing a metal oxide is in the range of, for example, 0.1 mm to 5 cm, preferably 0.5 mm to 1 cm, and more preferably 1 mm to 5 mm. In embodiments, the distance therebetween is not particularly restricted as long as the electrode is not in contact with a metal oxide and a metal material containing a metal oxide.

In the polarization treatment done by electrode non-contact polarization, it is preferable that the electric field gradient formed between the first electrode and the second electrode be 0.5 kV/cm or more.

Even in cases where the electric field gradient is 0.5 kV/cm or more, when the value is relatively small, the polarization treatment of a ceramic requires a long time. From such viewpoint, the electric field gradient is preferably 1 kV/cm or more.

The electric field gradient is preferably not higher than 20 kV/cm from the practical viewpoints such as the power source which can be used for applying a voltage. In embodiments, the upper limit of the electric field gradient is not particularly restricted.

As described above, the temperature of the polarization treatment may be arbitrarily selected in accordance with the purpose thereof in the range of, for example, from room temperature (20°C) to about 1,000°C. In embodiments, it is preferable that the polarization treatment be performed at a temperature around room temperature.

An example of metal oxide having a complex shape or metal material containing a metal oxide is one which has a threaded part. A specific example is a mode in which a metal oxide coat is formed in such a manner to cover the surface of the threaded part made of a metal. Application examples of a member having such a configuration include artificial tooth root in which titanium is used as a metal member and titanium oxide is used as a metal oxide coat formed on the surface of a threaded part.

Here, in cases where a polarization treatment of a metal oxide having a complex shape or a metal material containing a metal oxide is performed, it can be done also by using electrodes having a simple shape, such as of a plate. However, since the distance between the material having a complex shape and the electrodes is variable depending on the position on the member surface, in cases where the material having a complex shape is a metal material containing a metal oxide, it may be difficult to attain uniform and even polarization treatment of the metal oxide coat formed on the metal surface. Therefore, in such a case, it is preferable to use an electrode having a shape which is substantially analogous to the surface shape of the material having a complex shape and is also one size larger than the material having a complex shape (hereinafter, may be referred to as "analogously-shaped electrode").

The phrase "a shape which is one size larger" used herein means that, when an analogously-shaped electrode is arranged with a material having a complex shape in such a manner that the distance between the surface of the material having a complex shape and the surface of the analogously-shaped electrode positioned perpendicular to the surface of the material having a complex surface (the surface facing the member having a complex shape) is constant at any position, the distance between the member having a complex shape and the analogously-shaped electrode (margin distance) is in the range of from 1 mm to 5 mm.

By performing a polarization treatment in a non-contact condition using an analogously-shaped electrode, a metal oxide coat formed on metal surface can be uniformly and evenly polarized in the same manner as in the case of a contact-type polarization treatment using an electrode formed in close contact with the surface of the member having a complex shape (contact-type electrode). In addition, since such an analogously-shaped electrode is not required to have extremely high shape accuracy as in the case of a contact-type electrode, the preparation thereof is very easy and inexpensive.

The polarization method utilizing electrode non-contact polarization will now be described referring to the drawings.

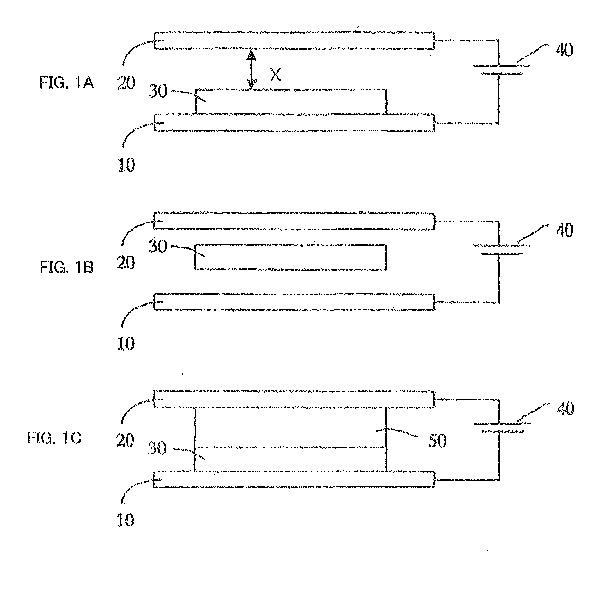

Fig. 1 is a schematic diagram showing a polarization treatment of a metal oxide by electrode non-contact polarization. In the diagram, 10 and 20 are plate electrodes; 30 is a discoid sample (a metal coated with a metal oxide); 40 is a direct-current power source; and 50 is a non-conductive member.

Here, when performing the polarization treatment, the two plate electrodes 10 and 20, which are connected to the direct-current power source 40, are arranged facing each other such that the surfaces of the electrodes become parallel to each other. The discoid sample 30 is disposed between a pair of these electrodes 10 and 20. Then, in this condition, a voltage is applied between the electrodes 10 and 20 to perform the polarization treatment of the discoid sample 30.

In this case, as shown in Fig. 1A, the discoid sample 30 may be arranged such that it is in contact with the electrode 10 but not with the other electrode 20. Alternatively, as shown in Fig. 1B, the discoid sample 30 may be arranged such that it is in contact with neither of the electrodes 10 and 20. In embodiments, as shown in Fig. 1C, the non-conductive member 50, such as a resin film, may be disposed between the electrode 20 and the discoid sample 30 in, with the discoid sample 30 being arranged in contact with the electrode 10 but not with the other electrode 20.

In Fig. 1A, usually, the distance X between the electrode 20 and the discoid sample 30 is, although it also depends on the conditions of the polarization treatment such as the strength of the electric field gradient formed between the electrodes 10 and 20, in the range of preferably from 0.1 mm to 5 cm, usually from 0.5 mm to 1 cm, and more preferably from 1 mm to 5 mm. At a distance X of shorter than 0.1 mm, the electrode 20 and the discoid sample 30 are likely to come into contact with each other when they are arranged. Therefore, particularly in those cases where the occurrence of contamination or damage of the surface of the discoid sample 30 becomes an issue, such a distance X is not preferable. Further, when the distance X is greater than 5 cm, it may be required to apply a very large voltage between the electrodes 10 and 20 in order to attain an electric field gradient required for the polarization treatment.

Here, in cases where the polarization treatment is performed at a high temperature, it can be done by, for example, arranging the electrodes 10 and 20, the discoid sample 30 and the non-conductive member 50 in a heating furnace (with a proviso that the non-conductive member 50 is formed of a material composed of a member which, for example, is not decomposed or degraded by the heat and does not thermally adhere to the discoid sample 30).

In cases where a metal oxide particle is the subject to be polarized, the polarization treatment can be performed by arranging, in place of the discoid sample 30 of Fig. 1A, a layer containing the metal oxide particle in a uniform thickness on the electrode 10. Further, the polarization of the metal oxide particle can also be performed in a container by placing the metal oxide particle in an appropriate container and arranging the container in place of the discoid sample 30 in Figs. 1A and 1B.

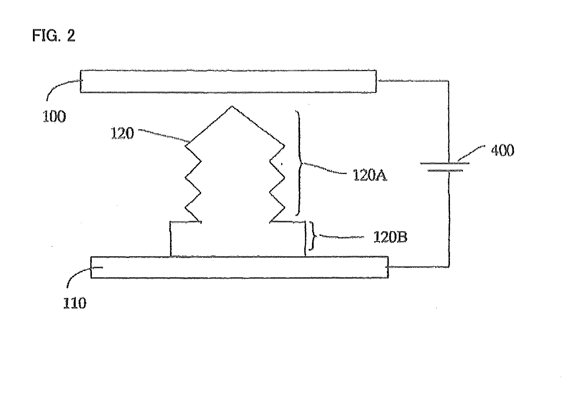

Fig. 2 is a schematic diagram (cross-sectional view) showing another example of the polarization treatment method of a metal oxide by electrode non-contact polarization. In the diagram, 100 and 110 are electrodes; 120 is a sample (a metal coated with a metal oxide); 120A is a threaded part; 120B is a base; and 400 is a direct-current power source.

The sample 120 to be polarized is configured by the discoid base 120B and the threaded part 120A provided on the upper surface of the base 120B, both of which base 120B and threaded part 120A are made of a metal. Further, a metal oxide coat (not shown) is formed only on the surface of the threaded part 120A. Here, when the sample is an artificial tooth root, for example, titanium can be used as the metal configurating the base 120B and the threaded part 120A, and titanium oxide can be used as the metal oxide coat.

EXAMPLES

The invention will now be described more concretely by way of examples thereof; however, within the scope of the invention, the invention is not restricted to the following examples. The "%" and "part" are based on mass unless otherwise specified.

Metal materials (Examples) having a polarized metal oxide coat and metal materials (Comparative Examples) having a non-polarized metal oxide coat were prepared and subjected to the evaluations A-1 to A-14. Further, biocompatible materials (implants) having a polarized titanium oxide coat were prepared and subjected to the evaluations B1 to B-3.

<A. Evaluations of metal material>

[Sample preparation]

After grinding the surface of a titanium disk (10 mm in diameter, 2 mm in thickness) made of pure titanium (Grade 2) with a 320# waterproof sandpaper, the resulting titanium disk was continuously ground with a 600# waterproof sandpaper to remove oxide on the disk surface. Then, the titanium disk was ultrasonically cleaned by placing it in a solution which is a mixture of acetone, ethanol and ion-exchanged water.
The thus obtained titanium disk is hereinafter referred to as "the original titanium disk".

[MAO treatment of the original titanium disk]

The original titanium disk (used as anode) and a stainless steel plate (used as cathode) were immersed in the below-described aqueous electrolyte solution and a voltage of 350 V was applied thereto for 15 minutes (MAO treatment) to obtain a titanium disk 1 in which a titanium oxide coat was formed only on one side of the original titanium disk (referred to as "titanium oxide-coated disk 1 "). Here, the MAO treatment was performed with cooling of the electrolytic bath such that the aqueous electrolyte solution was at a temperature of from room temperature to 40°C.
Also, titanium oxide-coated disks 2 and 3 were obtained in the same manner, except that the voltage was changed from 350 V to 400 V and 450 V, respectively.

-Aqueous electrolyte solution-

• 0.15 mol/mL $Ca(CH_3COO)_2$-$H_2O$
• 0.02 mol/mL $CaC_3H_7O_6P$

The above electrolytes were mixed at a ratio of 1:1 (by mass) and used as an aqueous electrolyte solution.

[Polarization treatment]

The titanium oxide-coated disks 1 to 3 were each disposed between two electrodes facing each other and a voltage of 1 kV/cm was applied thereto at 500°C for 2 hours. Here, polarized titanium oxide-coated disks N1 to N3 were obtained by arranging the respective surfaces of the oxide-coated disks on which a coat was formed in contact with the anode and the other surface (the surface with exposed titanium metal) not in contact with the cathode and then applying thereto a voltage. Further, polarized titanium oxide-coated disks P1 to P3 were obtained by arranging the respective surfaces of the oxide-coated disks on which a coat was formed in contact with the cathode and the other surface (the surface with exposed titanium metal) not in contact with the anode and then applying thereto a voltage.
Here, the surface of the titanium oxide coat obtained by polarizing the surface having a titanium oxide coat in contact with the anode is referred to as "N-surface" and the surface of the titanium oxide coat obtained by polarizing the surface having a titanium oxide coat in contact with the cathode is referred to as "P-surface". Further, the surface of the titanium oxide coat of the non-polarized titanium oxide-coated material is referred to as "O-surface".

-Examples 1-1, 1-2, 2-1, 2-2, 3-1 and 3-2 and Comparative Examples 1 to 3-

The thus obtained titanium oxide-coated disks 1 to 3, polarized titanium oxide-coated disks N1 to N3 and polarized titanium oxide-coated disks P1 to P3 were subjected to the following evaluations A-1 to A-14.
Those working examples relating to the polarized titanium oxide-coated disks N1 to N3 were designated as Examples 1-1, 2-1 and 3-1, respectively, and those working examples relating to the polarized titanium oxide-coated disks P1 to P3 were designated as Examples 1-2, 2-2 and 3-2, respectively. Further, the titanium oxide-coated disks 1 to 3, which are non-polarized metal oxide-coated materials, were designated as Comparative Examples 1 to 3.

It is noted here that the titanium oxide-coated disk 1, the polarized titanium oxide-coated disk N1 and the polarized titanium oxide-coated disk P1 may be hereinafter simply referred to as "disk O1", "disk N1" and "disk P1", respectively.

[Evaluation methods and evaluation results]

A-1. Observation of the coat surfaces of the titanium oxide-coated disks 1 to 3

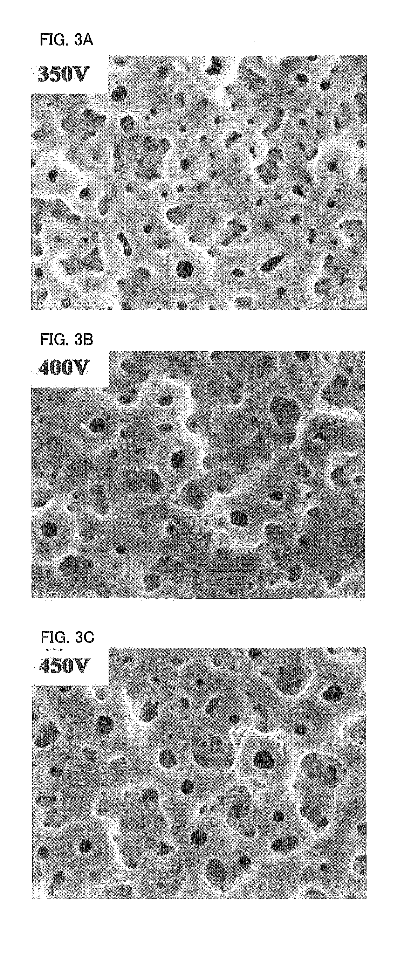

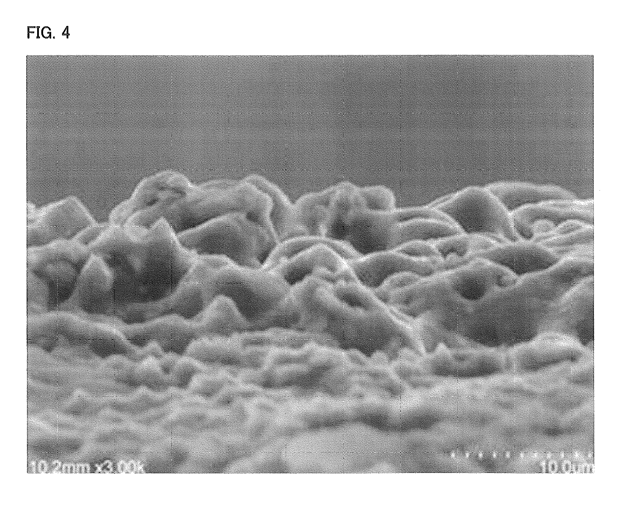

The surfaces of the metal oxide coat of the titanium oxide-coated disks 1 to 3 were evaluated by observation of their SEM (scanning electron microscope) images. The SEM images of the titanium oxide-coated disks 1 to 3 are shown in Figs. 3 and 4.

Fig. 3A shows the surface of the titanium oxide-coated disk 1 which was subjected to a MAO treatment at a voltage of 350 V; Fig. 3B shows the surface of the titanium oxide-coated disk 2 which was subjected to a MAO treatment at a voltage of 400 V; and Fig. 3C shows the surface of the titanium oxide-coated disk 3 which was subjected to a MAO treatment at a voltage of 450 V. Fig. 4 is a perspective image showing the surface of the titanium oxide-coated disk 2.

As seen from Figs. 3A to 3C, by subjecting the original titanium disk to a MAO treatment, the resulting titanium oxide-coated disks 1 to 3 had a uniformly porous surface.

A-2. EDX measurement of the titanium oxide-coated disks 1 to 3

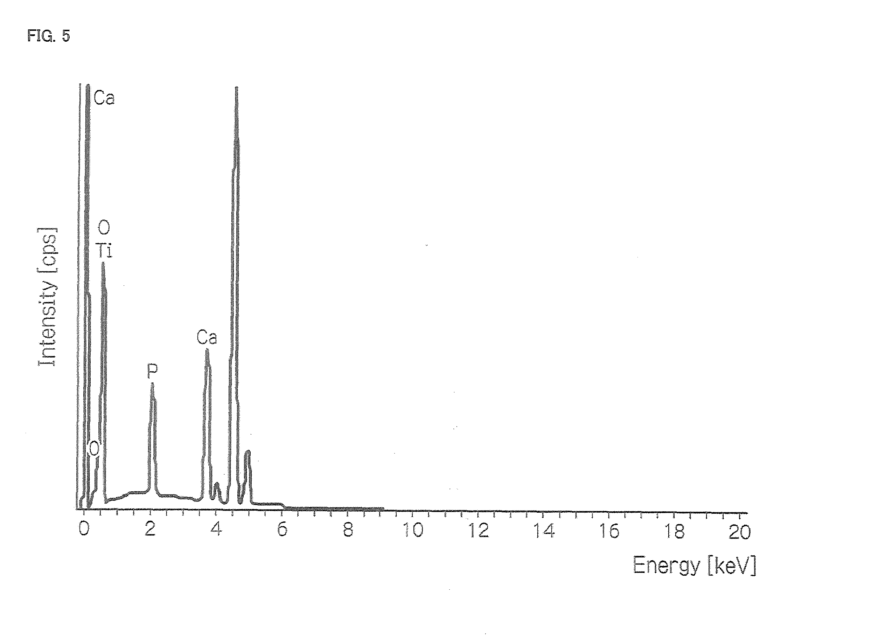

The surfaces of the metal oxide coat of the titanium oxide-coated disks 1 to 3 were subjected to EDX (Energy Dispersive X-ray Spectroscopy) measurements to verify the constituent elements of the titanium oxide-coated disks 1 to 3. As EDX apparatus, S-3400NX manufactured by Hitachi, Ltd. was employed. Fig. 5 shows the EDX spectrum of the titanium oxide-coated disk 2 (disk 02) and Table 1 shows the mass concentrations [%] and atomic concentrations [%] of elemental O, elemental P, elemental Ca and elemental Ti. Further, Table 2 shows the atomic concentrations [%] of elemental Ca and elemental P in the titanium oxide-coated disks 1 to 3 (disks O1 to 03).

Table 1

| Element | Mass concentration [%] | Atomic concentration [%] |
|---------|------------------------|--------------------------|
| OK | 45.16 | 69.72 |
| PK | 4.57 | 3.64 |
| CaK | 6.98 | 4.30 |
| TiK | 43.30 | 22.33 |
| Total | 100.00 | |

Table 2

| Element | Atomic concentration [%] | | |
|---------|--------|--------|--------|
| | Disk01 | DisK02 | Disk03 |
| PK | 4.03 | 5.32 | 5.39 |
| CaK | 2.69 | 3.25 | 3.20 |

From Fig. 5 and Tables 1 and 2, it was found that, by subjecting the original titanium disk to a MAO treatment in an aqueous electrolyte solution containing calcium and a phosphoric acid salt, the resulting titanium oxide-coated disks 1 to 3 contained elemental P and elemental Ca.

It is thought that, by allowing a titanium oxide coat to contain elemental P and elemental Ca, which are also contained in bones and tooth roots, and using such metal material as a biological material, bone development can be facilitated and rapid bone growth can be promoted.

A-3. XRD measurement of the titanium oxide-coated disk 2

The surface of the metal oxide coat of the titanium oxide-coated disk 2 was subjected to XRD (X-Ray Diffraction) measurement to verify the presence of titanium oxides (anatase and rutile) and metal titanium in the titanium oxide-coated disk 2. As XRD apparatus, PW-1710 manufactured by Philips was employed.

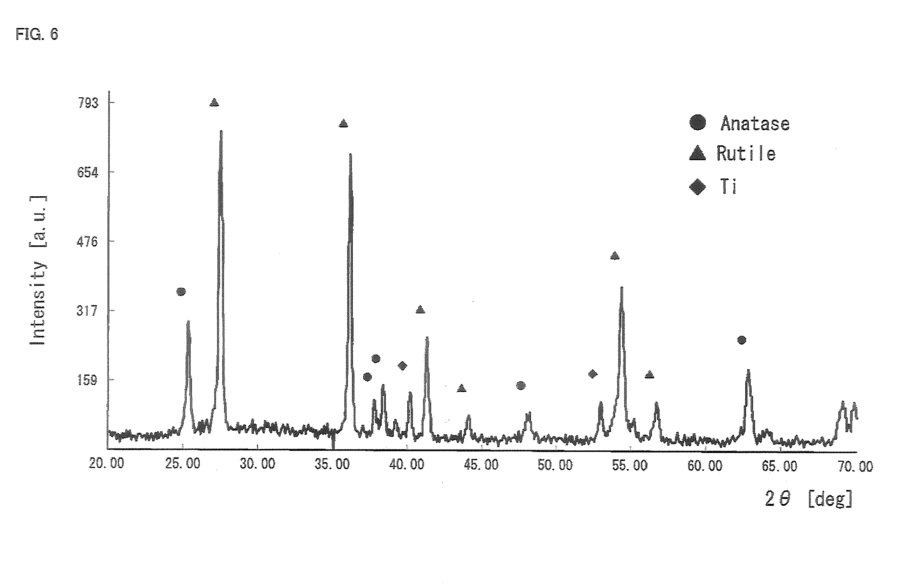

Fig. 6 shows the XRD spectrum of the titanium oxide-coated disk 2. In Fig. 6, those peaks indicated with a filled circle represent the presence of titanium oxide having an anatase-type structure and those peaks indicated with a solid triangle represent the presence of titanium oxide having a rutile-type structure. Those peaks indicated with a solid lozenge represent the presence of metal titanium.

A-4. TSDC measurement of the polarized titanium oxide-coated disks N2 and N3

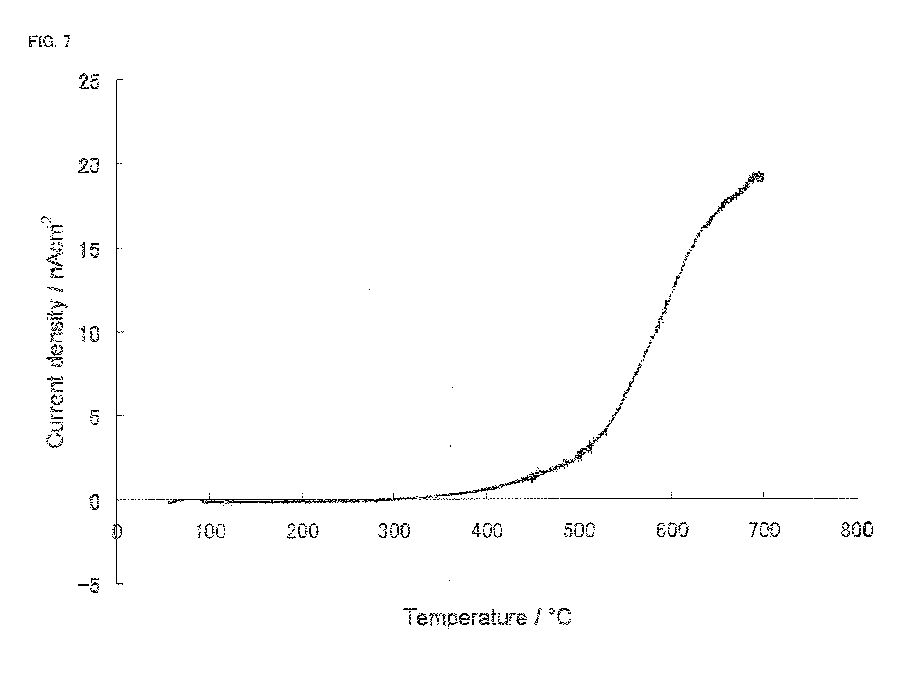

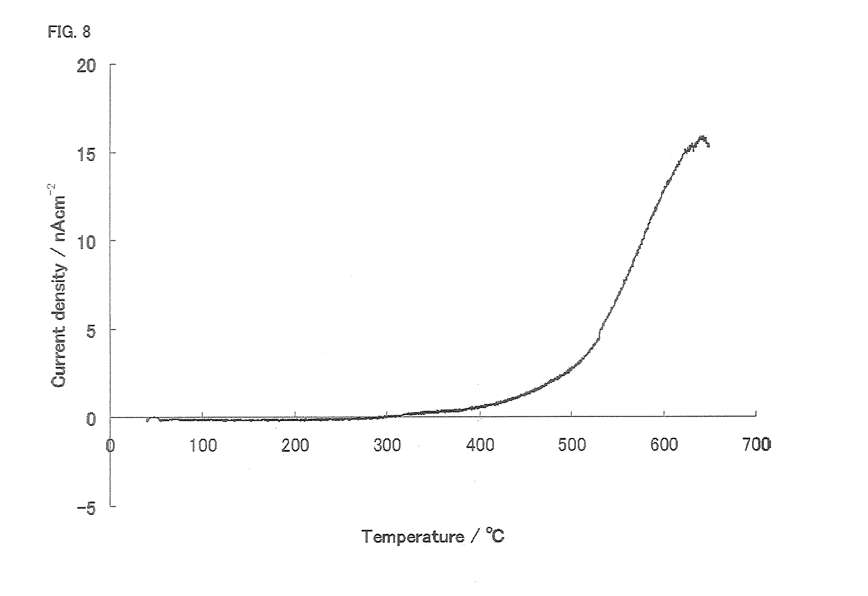

The polarized titanium oxide-coated disks N2 and N3 were subjected to TSDC (Thermally Stimulated Depolarization Current) measurement to evaluate the presence or absence of polarized state and the level thereof. The TSDC measurement is a method in which a sample in a polarized state is heated at a constant rate to measure the relaxation phenomenon, which is a charge transfer from a frozen quasi-equilibrium state to a thermal equilibrium state, in terms of the depolarization current.
The TSDC measurement was performed by measuring the electric current generated in the relaxation process of the polarized state of the polarized titanium oxide-coated disk N2 when the polarized titanium oxide-coated disk N2 was heated from at least 5°C to 750°C at a heating rate of 5°C/min with platinum electrodes being closely in contact with both surfaces of the polarized titanium oxide-coated disk N2. Further, TSDC measurement of the polarized titanium oxide-coated disk N3 was also performed in the same manner, except that the polarized titanium oxide-coated disk N3 was used in place of the polarized titanium oxide-coated disk N2.
The results of the TSDC measurement of the polarized titanium oxide-coated disks N2 and N3 are shown in Figs. 7 and 8, respectively. In Figs. 7 and 8, the abscissa indicates temperature (°C) and the ordinate indicates the amount of current per unit area ($nA/cm^2$).
Further, the current values (thermally stimulated relaxation current) indicated on the ordinate of Figs. 7 and 8 were time-integrated in accordance with the following Equality 1 to determine the amount of accumulated charge Q ($\mu C/cm^2$):
Equality 1

$$Q = \frac{1}{\beta} \int I(T)dT$$

(In Equality 1, $\beta$ represents a heating rate, and I(T) represents a depolarization current density.)
The followings are the amounts of accumulated charge Q ($\mu C/cm^2$) calculated for the polarized titanium oxide-coated disks N2 and N3:

- polarized titanium oxide-coated disk N2: Q = 55.45
- polarized titanium oxide-coated disk N3: Q = 43.13

A-5. SBF immersion test

Using a SBF (simulated body fluid), which is an aqueous solution that does not contain any cell and protein and has an inorganic ion concentration substantially equal to that of human extracellular fluid, the amount of bone-like hydroxyapatite precipitated from a disk immersed in such SBF was evaluated.
Here, in this immersion test, as the SBF, 1.5 SBF in which the concentrations of all inorganic ions are 1.5 times of those in human extracellular fluid was employed.
The 1.5 SBF was prepared by mixing the components shown in the following Table 3 and adjusting the resultant to have pH 7.4 using Tris buffer $(CH_2OH)_3CNH_2$ and hydrochloric acid at 36.5°C.
Table 3

| Component | [mol/L] |
|---|---|
| $Na^+$ | 213.0 |
| $K^+$ | 7.5 |
| $Mg^{2+}$ | 2.3 |
| $Ca^{2+}$ | 3.8 |
| $Cl^-$ | 221.7 |
| $HCO_3^-$ | 6.3 |
| $HPO_4^{2-}$ | 1.5 |
| $SO_4^{2-}$ | 0.8 |

The evaluation method using the SBF immersion test is as follows.
Test tubes containing 50 mL of 1.5 SBF were prepared. Into each 1.5 SBF, four of the respective titanium oxide-coated disks 1 to 3, polarized titanium oxide-coated disks N1 to N3 and polarized titanium oxide-coated disks P1 to P3 were immersed and left to stand at 36.5°C for 14 days. On each of the first, third, seventh and fourteenth days of the immersion, one disk was taken out and gently washed with distilled water, followed by drying at room temperature.
Hydroxyapatite precipitated on each disk after drying was observed by taking SEM image.

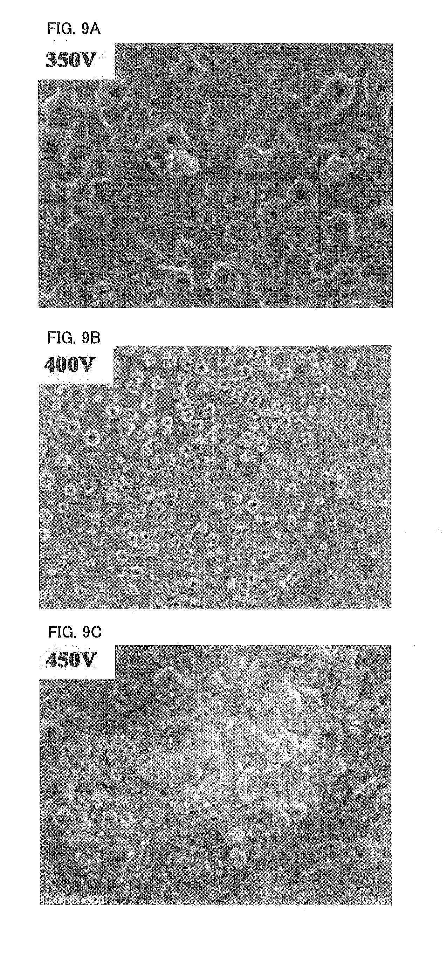

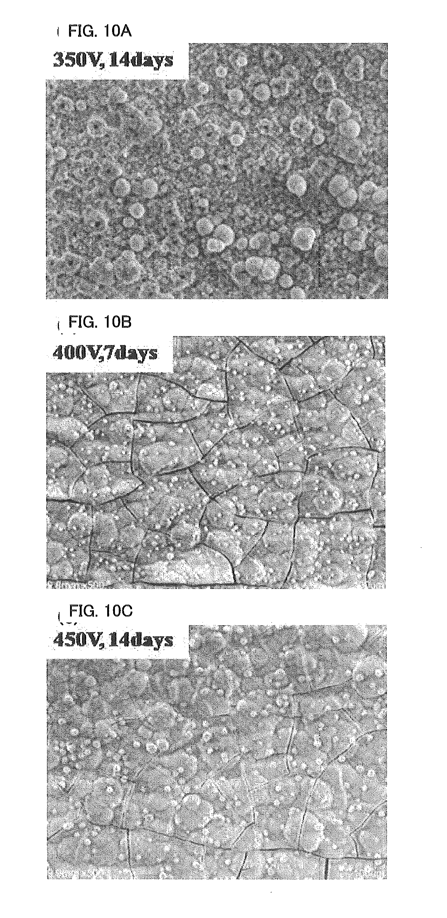

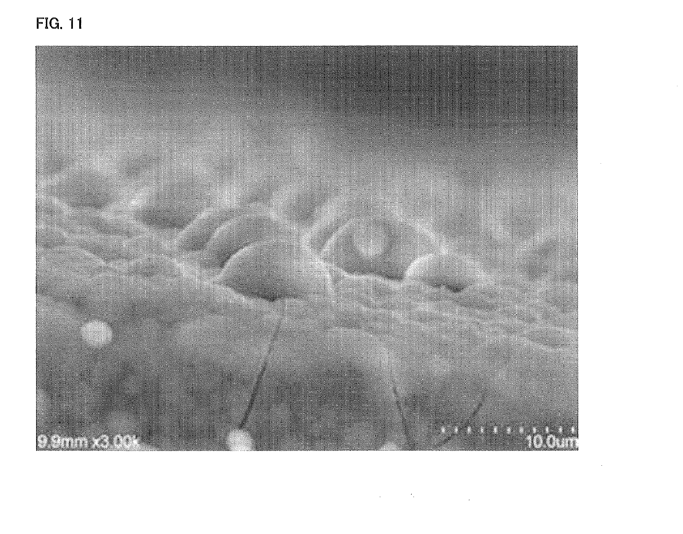

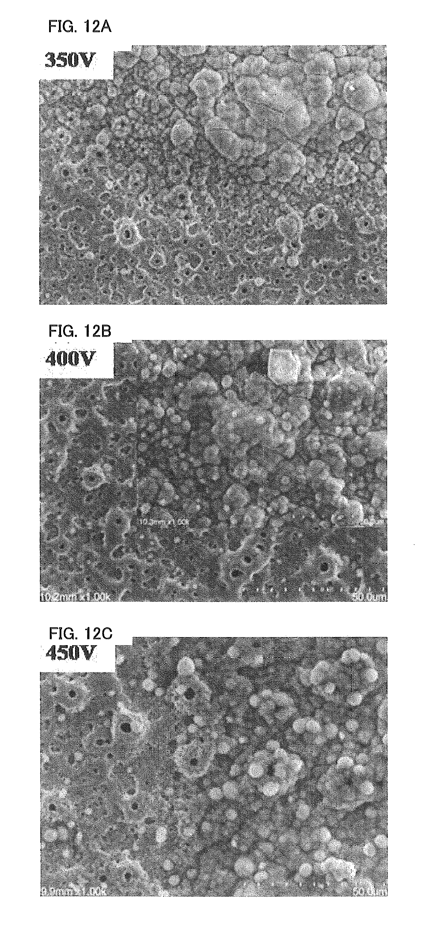

Figs. 9A to 9C show the SEM images of the titanium oxide-coated disks 1 to 3 (O-surface); Figs. 10A to 10C show the SEM images of the polarized titanium oxide-coated disks N1 to N3 (N-surface); and Figs. 12A to 12C show the SEM images of the polarized titanium oxide-coated disks P1 to P3 (P-surface). Except for Fig. 10B and Fig. 11, all of the SEM images show a disk surface at Day 14 of the immersion. Fig. 10B and Fig. 11 are SEM images showing the surface of the polarized titanium oxide-coated disk N2 (to which a voltage of 400 V was applied in the MAO treatment) at Day 7 of the immersion in 1.5 SBF.

The titanium oxide-coated disks 1 to 3, which are non-polarized disks shown in Fig. 9, were all observed with pores on the surface of the metal oxide coat, which pores were also observed in the observation of the coat surface of the titanium oxide-coated disks 1 to 3 in the evaluation A-1.
The polarized titanium oxide-coated disk N1 shown in Fig. 10 was observed with hardly any pores on the disk substrate and it was found that the polarized titanium oxide-coated disks N2 and N3 were completely covered with hydroxyapatite.
In particular, as also seen from Fig. 10B, the surface of the polarized titanium oxide-coated disk N2 was coated with thick bond-like hydroxyapatite already at Day 7 of the immersion in 1.5 SBF. Therefore, when the polarized titanium oxide-coated disk N2 is implanted into the body as a biocompatible material, it is expected that the disk exhibit sufficient biocompatibility and that bone growth be rapidly attained.
Although the polarized titanium oxide-coated disks P1 to P3 shown in Fig. 12 were observed with pores on their disk substrates, they were found to have a greater amount of precipitated hydroxyapatite and superior biocompatibility as compared to the surfaces of the titanium oxide-coated disks 1 to 3.

A-6. EDX measurement of the polarized titanium oxide-coated disk N2

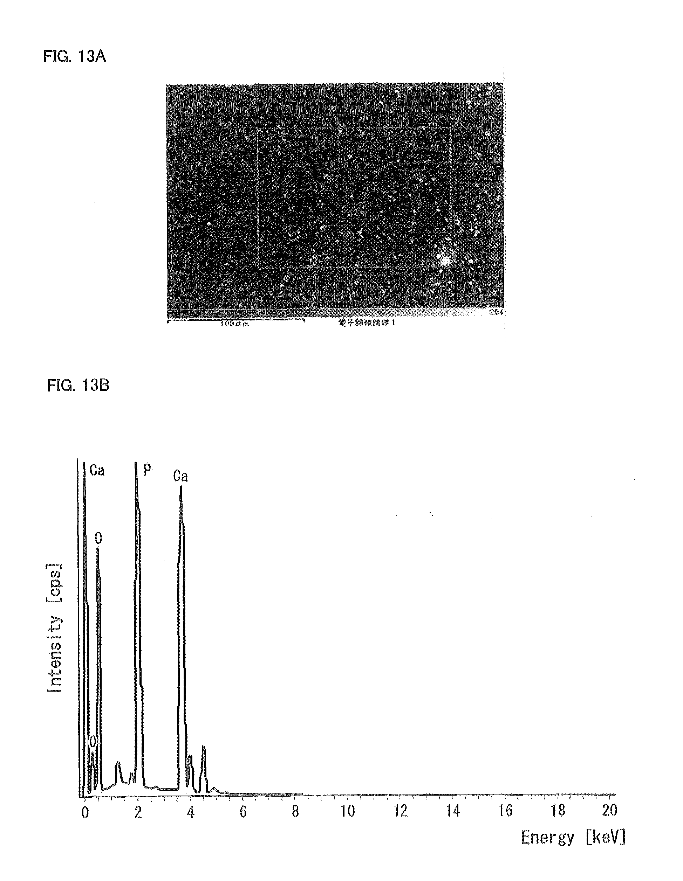

The surface of the metal oxide coat of the polarized titanium oxide-coated disk N2 at Day 7 of the immersion in 1.5 SBF (the boxed portion in Fig. 13A), which was obtained by the SBF immersion test of A-5, was subjected to EDX measurement. The EDX apparatus used here was the same as the one used in the A-2.
Fig. 13B shows the thus obtained EDX spectrum and Table 4 shows the mass concentrations [%] and atomic concentrations [%] of the detected elements. It is noted here that the SEM image of Fig. 13A and that of the Fig. 10B are the same, both of which are the SEM image showing the surface of the polarized titanium oxide-coated disk N2 at Day 7 of the immersion in 1.5 SBF.
Table 4

| Element | Mass concentration [%] | Atomic concentration [%] |
|---|---|---|
| OK | 8.41 | 14.31 |
| PK | 47.50 | 60.72 |

(continued)

| Element | Mass concentration [%] | Atomic concentration [%] |
|---------|------------------------|--------------------------|
| CaK | 16.47 | 10.87 |
| TiK | 27.62 | 14.09 |
| Total | 100.00 | |

As seen from Fig. 13B and Table 4, as compared to before the immersion in SBF (Fig. 5, Table 2), the amounts of elemental Ca and elemental P were increased.

A-7. XPS measurement of the polarized titanium oxide-coated disk 2

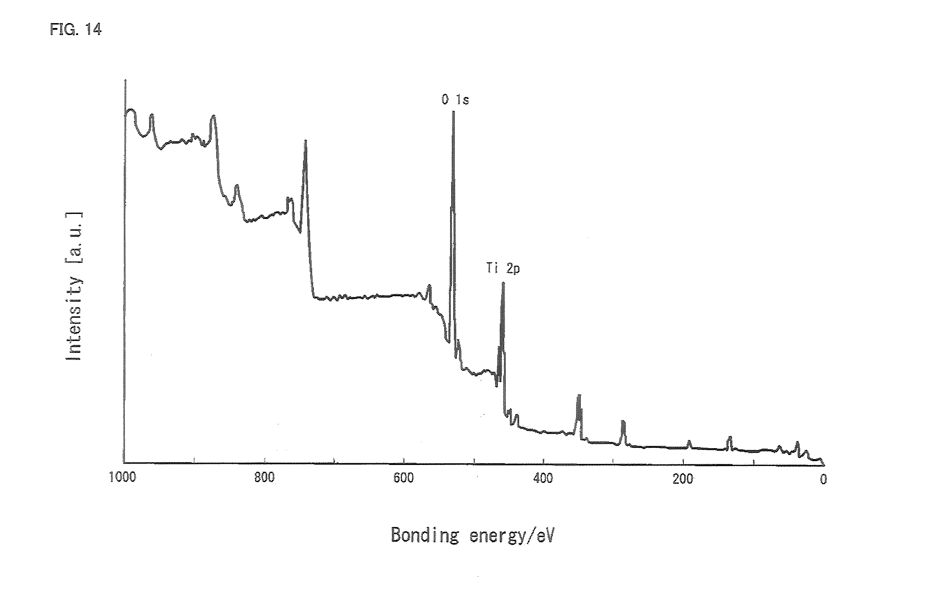

The surface of the metal oxide coat of the polarized titanium oxide-coated disk 2 was subjected to XPS (X-ray Photoelectron Spectroscopy). As XPS apparatus, JPS-9010MC manufactured by JEOL Ltd. was employed.
The thus obtained XPS spectra are shown in Figs. 14 to 16.
Fig. 14 is a spectrum showing the bonding energies of elemental oxygen (O) and elemental titanium (Ti) that were detected from the surface of the metal oxide coat of the polarized titanium oxide-coated disk 2.

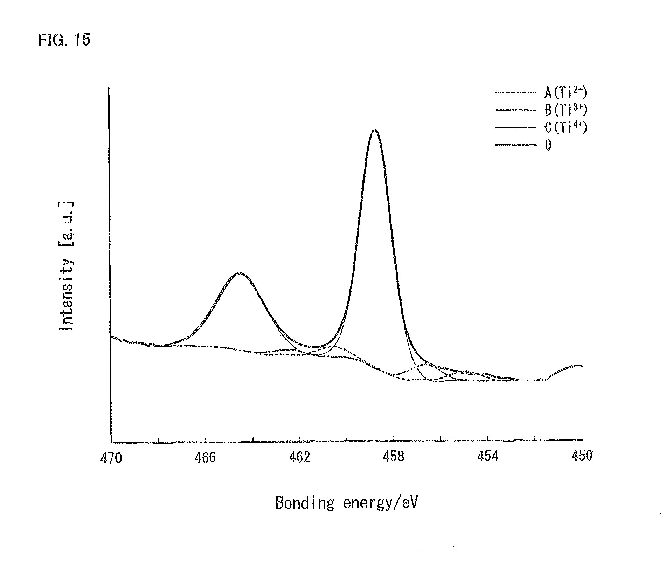

Fig. 15 shows a peak curve (curve D), which is an enlargement of the peak (Ti 2p) of elemental titanium shown in Fig. 14, and peaks obtained by separating the curve D for $Ti^{2+}$ (curve A), $Ti^{3+}$ (curve B) and $Ti^{4+}$ (curve C). The peak heights of the curves A to C indicate the bonding energy and the amount of the respective $Ti^{2+}$, $Ti^{3+}$ and $Ti^{4+}$ ions that are present on the disk surface.

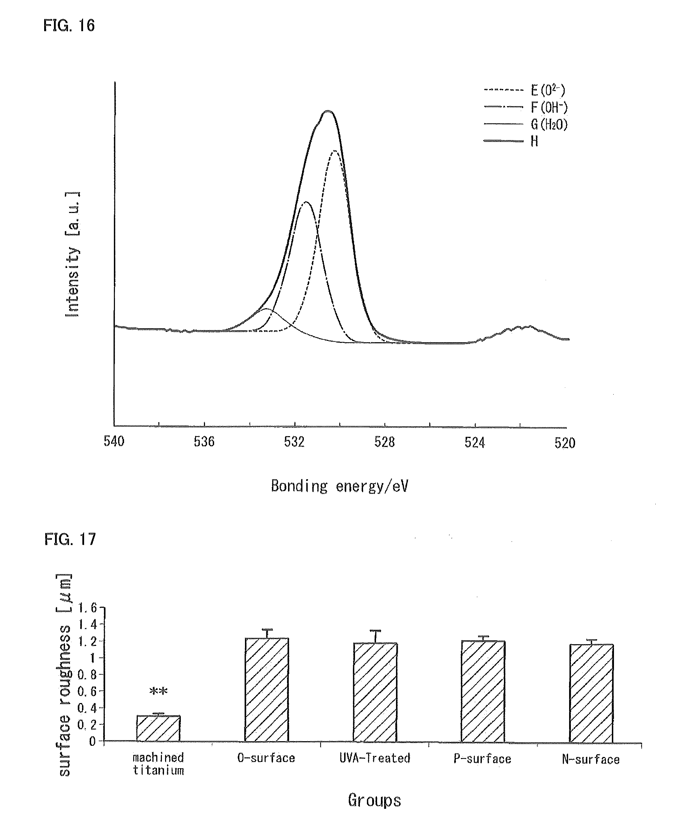

Fig. 16 is a portion of the XPS spectrum shown in Fig. 14 and shows a peak curve (curve H), which is an enlargement of the peak (O Is) of elemental oxygen shown in Fig. 14, and peaks obtained by separating the curve D for $O^{2-}$ (curve E), $OH^-$ (curve F) and $H_2O$ (curve G). The peak heights of the curves E to G indicate the bonding energy and the amount of $O^{2-}$, $OH^-$ and $H_2O$ that are present on the disk surface. The $O^{2-}$ represents the presence of elemental oxygen originated from the metal oxide ($TiO_2$) present on the disk surface. The $OH^-$ represents the presence of elemental oxygen originated from the OH groups present on the disk surface. Since $OH^-$ was detected with a large peak, it is understood that the disk surface was in a condition of easily forming hydrogen bonds with water molecules, that is, hydrophilic.
Table 5 shows the bonding energy, FWHM and existence ratio of the respective ions, which were grasped from the XPS spectra relating to $Ti^{2+}$, $Ti^{3+}$ and $Ti^{4+}$ of the titanium oxide-coated disk 2 (disk 02), polarized titanium oxide-coated disk N2 and polarized titanium oxide-coated disk P2.
Further, the bonding energy, FWHM and existence ratio of the respective chemical states, which were grasped from the XPS spectra relating to $O_2$, OH and $H_2O$ of the titanium oxide-coated disk 2 (disk 02), polarized titanium oxide-coated disk N2 and polarized titanium oxide-coated disk P2, are shown in Table 6.
It is noted here that the FWHM represents a half-value width.
Table 5

| Chemical state | DisK 02 | | | DisK P2 | | | DisK N2 | | |
|----------------|---------|---|---|---------|---|---|---------|---|---|
| | Bonding energy [eV] | FWHM | Ratio [%] | Bending energy [eV] | FWHM | Ratio [%] | Bending energy [eV] | FWHM | Ratio [%] |
| $Ti^{2+}$ | 455.21 | 1.5 | 2.42 | 454.95 | 1.5 | 2.48 | 455.08 | 1.5 | 2.52 |
| $Ti^{3+}$ | 457.01 | 1.5 | 4.07 | 456.75 | 1.5 | 4.02 | 456.88 | 1.5 | 4.09 |
| $Ti^{4+}$ | 459.09 | 1.5 | 60.24 | 458.88 | 1.5 | 58.79 | 458.97 | 1.5 | 59.43 |

Table 6

| Chemical state | DisK 02 | | | DisK P2 | | | DisK N2 | | |
|---|---|---|---|---|---|---|---|---|---|
| | Bonding energy [eV] | FWHM | Ratio [%] | Bending energy [eV] | FWHM | Ratio [%] | Bonding energy [eV] | FWHM | Ratio [%] |
| $O_2$ | 530.64 | 1.6 | 54.48 | 530.40 | 1.6 | 48.74 | 530.47 | 1.7 | 44.37 |
| OH | 531.89 | 1.7 | 38.86 | 531.62 | 1.6 | 44.95 | 531.68 | 1.7 | 50.08 |
| $H_2O$ | 533.59 | 1.6 | 6.66 | 533.44 | 1.6 | 6.31 | 533.53 | 1.7 | 5.56 |

From Table 6 as well, the presence of OH group was confirmed on the surfaces of the respective disks. The polarized titanium oxide-coated disks N2 and P2 having a polarized metal oxide coat surface had a higher existence ratio of OH group as compared to the non-polarized titanium oxide-coated disk 2. In particular, it is seen that the polarized titanium oxide-coated disk N2 having an N-surface has the highest OH group existence ratio and thus exhibits excellent hydrophilicity.

A-8. Surface roughness

The surface roughness [$\mu$m] of the metal oxide coats of the titanium oxide-coated disk 2 (O-surface), polarized titanium oxide-coated disk N2 (N-surface) and polarized titanium oxide-coated disk P2 (P-surface) was measured using DROP MASTER DM-500 manufactured by Kyowa Interface Science Co., Ltd. The measurement was performed at three different spots for each disk and the average (broad bar) and variance (T-bar) thereof were shown in Fig. 17.
Further, also for the surface of the original titanium disk (titanium disk of before the MAO treatment, which does not have a metal oxide coat) and that of a UV-treated original titanium disk, the surface roughness was measured at three different spots and the average (broad bar) and variance (T-bar) thereof were shown in Fig. 17. Here, the UV treatment of the original titanium disk was performed by irradiating the original titanium disk with UV radiation having a wavelength of 360 at an intensity of 0.1 mW/cm$^2$ for 24 hours.
In Fig. 17, "machined titanium", "O-surface", "UVA-treated", "P-surface" and "N-surface" indicate the evaluation results for the original titanium disk, titanium oxide-coated disk 2, UV-treated original titanium disk, polarized titanium oxide-coated disk P2 and polarized titanium oxide-coated disk N2, respectively.

A-9. Contact angle

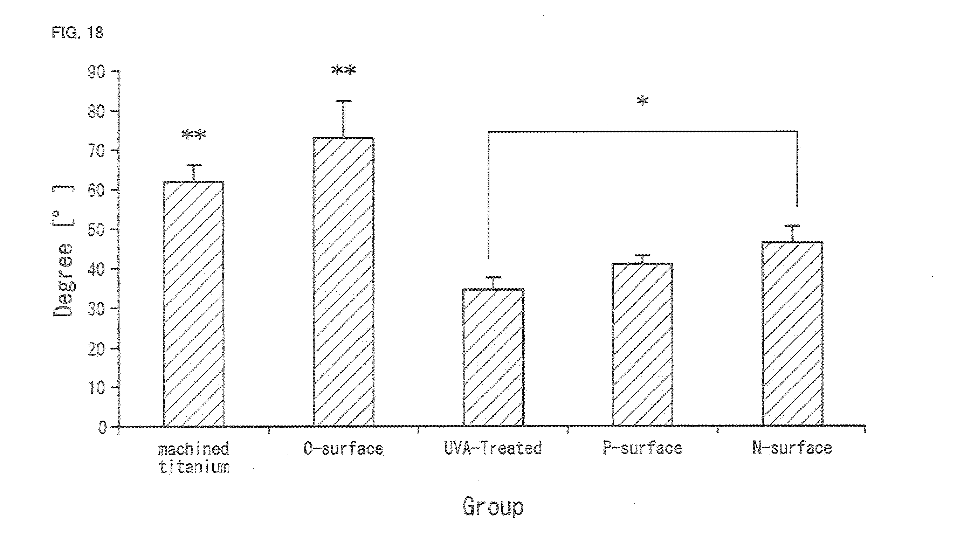

The contact angles [degree (°)] at which the metal oxide coat surfaces of the titanium oxide-coated disk 2 (O-surface), polarized titanium oxide-coated disk N2 (N-surface) and polarized titanium oxide-coated disk P2 (P-surface) contact with water were measured using a Dataphysics Contact Angle System equipped with a microscope and a camera (manufactured by Kyowa Interface Science Co., Ltd.; DROP MASTER DM-500). For each disk, the contact angle was measured at three different spots and the average (broad bar) and variance (T-bar) thereof were shown in Fig. 18.
Further, also the surface of the original titanium disk and that of a UV-treated original titanium disk, the contact angle [degree] was measured at three different spots and the average (broad bar) and variance (T-bar) thereof were shown in Fig. 18. Here, as the UV-treated original titanium disk, the same one as used in the evaluation A-8 of the surface roughness was employed.
In Fig. 18, "machined titanium", "O-surface", "UVA-treated", "P-surface" and "N-surface" indicate the evaluation results for the original titanium disk, titanium oxide-coated disk 2, UV-treated original titanium disk, polarized titanium oxide-coated disk P2 and polarized titanium oxide-coated disk N2, respectively. A smaller contact angle against water indicates a smaller hydrophilicity. As described in the above, a disk surface having hydrophilicity is likely to express biocompatibility. Concerning hydrophilicity, it was confirmed from the evaluations A-10. Cell adhesion test to A-14. ALP activity that a UV irradiation treatment has greater effect than a polarization treatment in the short term; however, under physiological conditions, a polarization treatment had sustained effect over a long period.

A-10. Cell adhesion test

MG63 cells were inoculated on a sample and immobilized with 4% formalin. After performing nuclear staining of the cells with DAPI (4,6-diamidino-2-phenylindole dihydrochloride), the resulting sample was observed under a fluorescence microscope (OLYMPUS IX70, OLYMPUS DP70; manufactured by Olympus Corporation) to investigate the number of cells adhered.

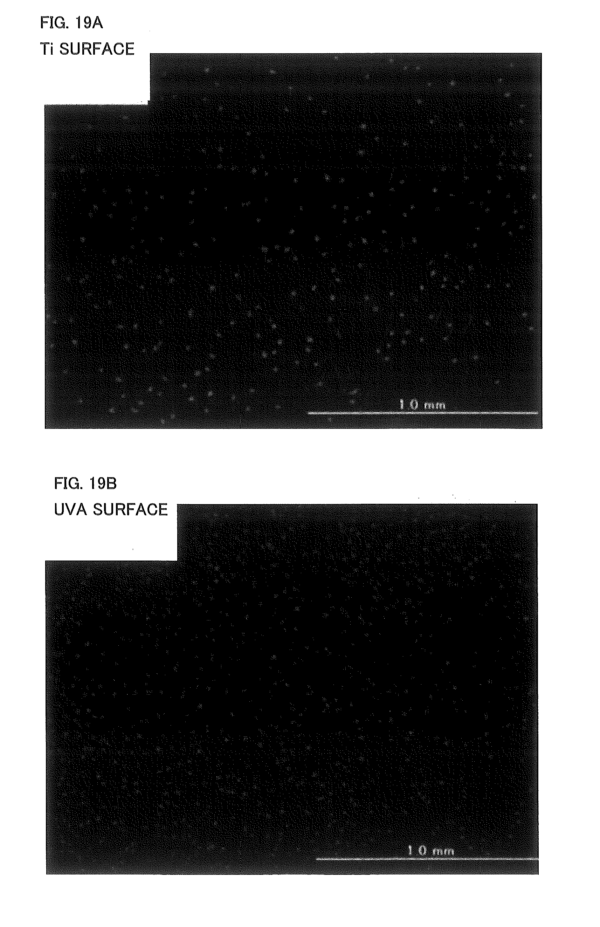

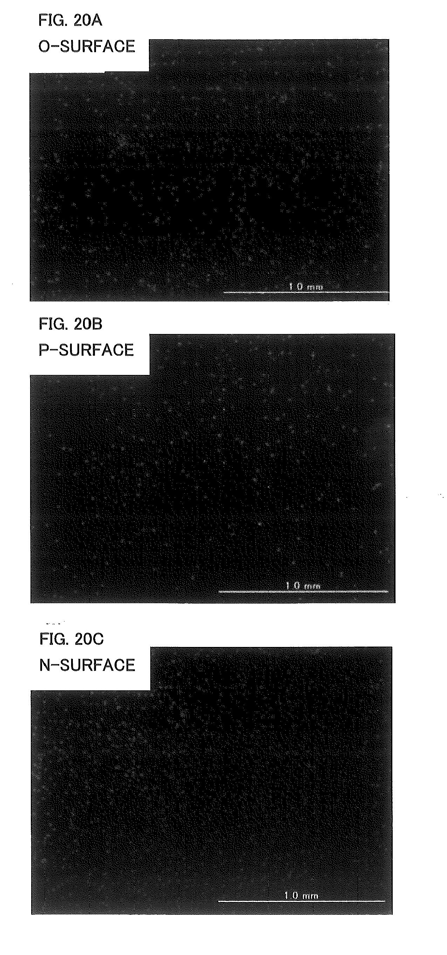

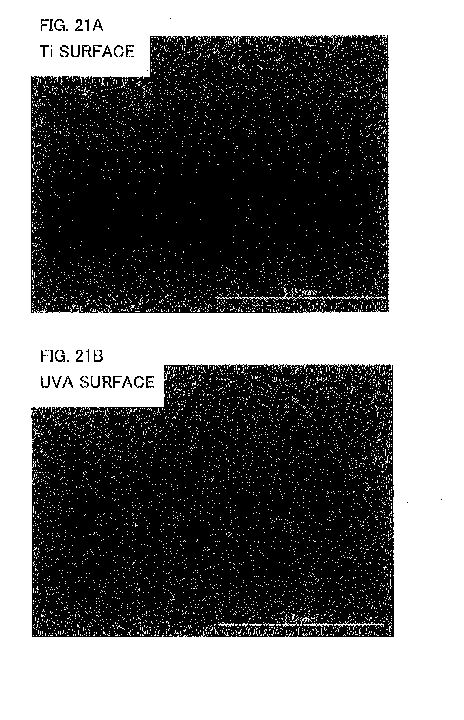

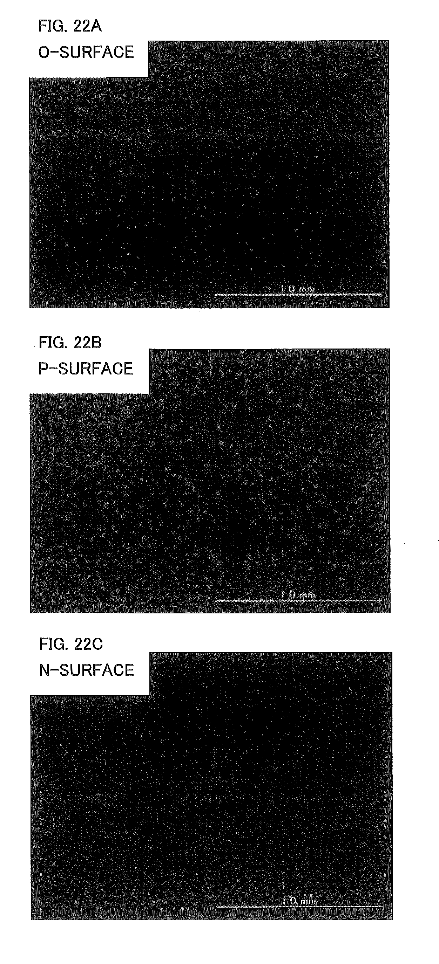

Figs. 19A and 19B, Figs. 20A to 20C, Figs. 21A and 21B and Figs. 22A to 22C show the respective fluorescence micrographs of the surfaces of the original titanium disk, titanium oxide-coated disk 2 (O-surface), UV-treated titanium disk, polarized titanium oxide-coated disk N2 (N-surface) and polarized titanium oxide-coated disk P2(P-surface), which were taken after the MG63 cell adhesion. Figs. 19 and 20 are images taken 2 hours after the MG63 cell adhesion, while Figs. 21 and 22 are images taken 4 hours after the MG63 cell adhesion.

The small dots in the fluorescence micrographs are the cells that adhered to the respective disk surfaces. As seen from Fig. 20C and Fig. 22C, a great number of cells adhered to the surface of the polarized titanium oxide-coated disk N2 (N-surface) as compared to those surfaces of the original titanium disk and the titanium oxide-coated disk 2 (O-surface).

A-11. MTT (methylthiazol tetrazolium) assay

MG63 cells were inoculated on a sample and MTT (3-[4,5dimethylthiazol-2-yl]-2,5-diphenyltetrazolium bromide) solution was added thereto (final concentration: 0.05%). The medium was removed 2 hours later and the precipitated formazan was dissolved in DMSO (dimethyl sulphoxide). For the thus obtained solution, absorbance was measured at 570 nm (MICROPLATE READER MODEL 680; manufactured by Bio-Rad Laboratories, Inc.). From the measured absorbance, the number of viable cells can be predicted.

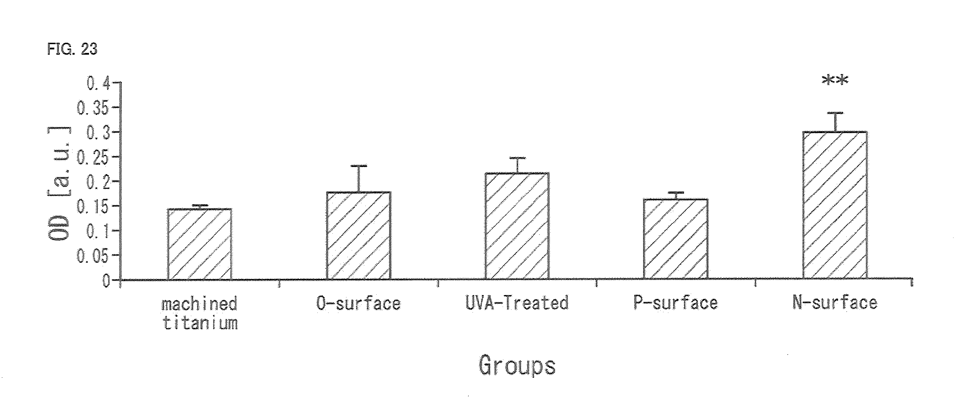

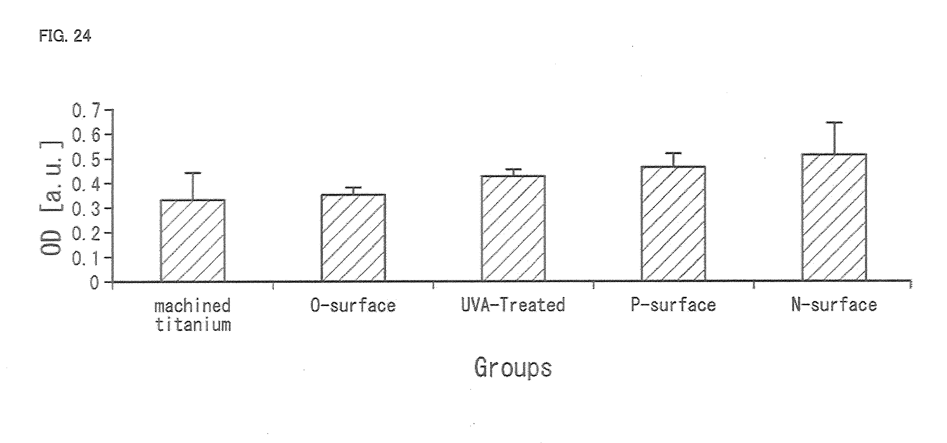

Figs. 23 and 24 are bar graphs showing the average values (average of 5 measurements; broad bars) and variances (T-bars) of the absorbances that were measured in the MTT assay for MG63 cells adhered to the respective surfaces of the original titanium disk, titanium oxide-coated disk 2 (O-surface), UV-treated titanium disk, polarized titanium oxide-coated disk N2 (N-surface) and polarized titanium oxide-coated disk P2 (P-surface). Fig. 23 is a graph showing the absorbances at 4 hours after the MG63 cell adhesion and Fig. 24 is a graph showing the absorbances at 24 hours after the MG63 cell adhesion.

From Fig. 23, the amounts of the adhered MG63 cells at 4 hours after the adhesion thereof are verified, so that the evaluation results obtained in the cell adhesion tests of A-10, which are shown in Figs. 21) and 21B and Figs. 22A to 22C, are supported.

As seen from the comparison of Fig. 23 and Fig. 24, it was found that, although there was no difference in the amounts of adhered cells at 24 hours, the amounts of adhered cells were different until 4 hours after the MG63 cell adhesion. However, it is thought that, by using the polarized titanium oxide-coated disk N2 having an N-surface as a biological material, a large amount of cells can be adhered in a short period of time (4 hours, Fig. 23) and cells can be quickly immobilized on the surface of the metal material, so that rapid bone growth can be attained.

A-12. Actin staining

MG63 cells were inoculated on a sample and immobilized with 4% formalin. Then, the cells were stained with fluorescent phalloidin to investigate the intracellular localization of actin, which plays a role as a cytoskeleton. The mode of cell adhesion was observed in detail under a fluorescence microscope (OLYMPUS IX70, OLYMPUS DP70; manufactured by Olympus Corporation). The cells are circular immediately after the inoculation; however, as the adhesion process advances, the cells extend pseudopodia to secure a scaffold.

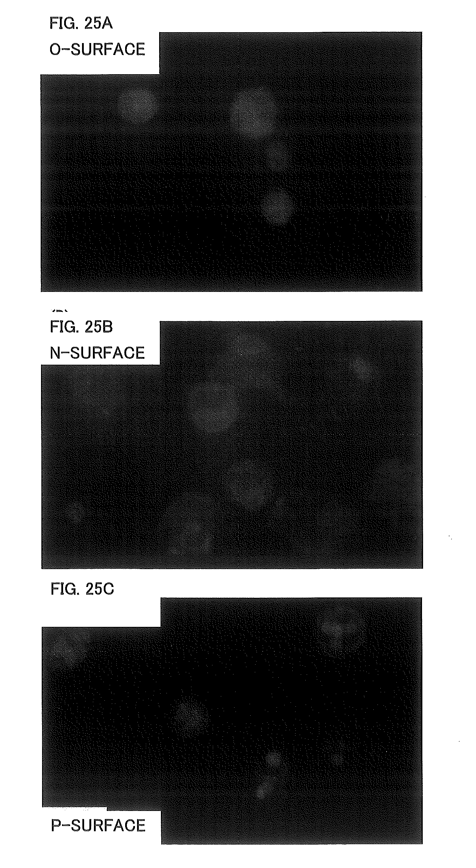

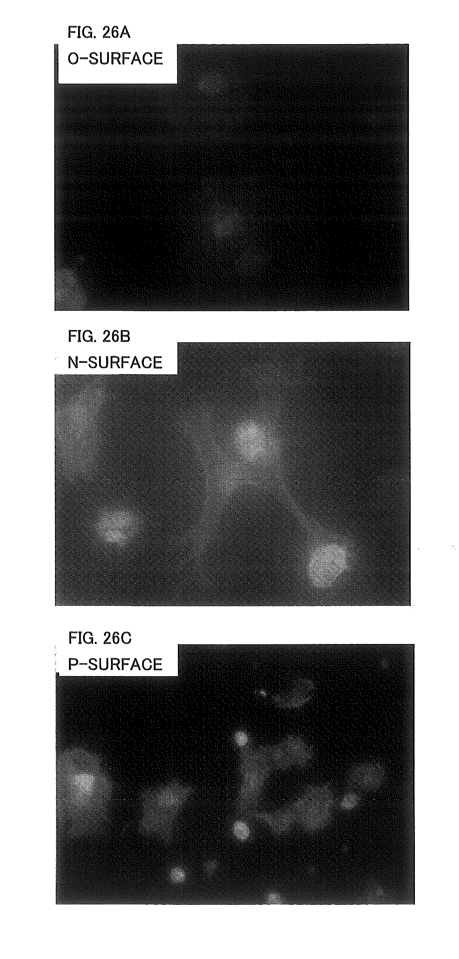

Figs. 25A to 25C and Figs. 26 Ato 26C show immunofluorescence micrographs of actin in the cells adhered to the respective surfaces of the titanium oxide-coated disk 02, polarized titanium oxide-coated disk N2 and polarized titanium oxide-coated disk P2. The images of Figs. 25 and 26 were taken at 1 hour and 3 hours after the adhesion, respectively.

From the comparison of Figs. 25 and 26, it was found that, on the surface of the titanium oxide-coated disk 02, many cells remained circular, hardly changing their shape between the first hour and the third hour. However, on the surfaces of the polarized titanium oxide-coated disk N2 and the polarized titanium oxide-coated disk P2, the cells were observed to extend pseudopodia, secure a scaffold and attain good adhesion thereto. Thus, it can be seen that cell adhesion was progressing on the polarized disk surfaces.

In particular, it can be seen that a number of cells were promoted to adhere to the surface of the polarized titanium oxide-coated disk N2.

A-13. Cell growth

Using MTT assay, the number of cells was calculated and the growth rate was determined.

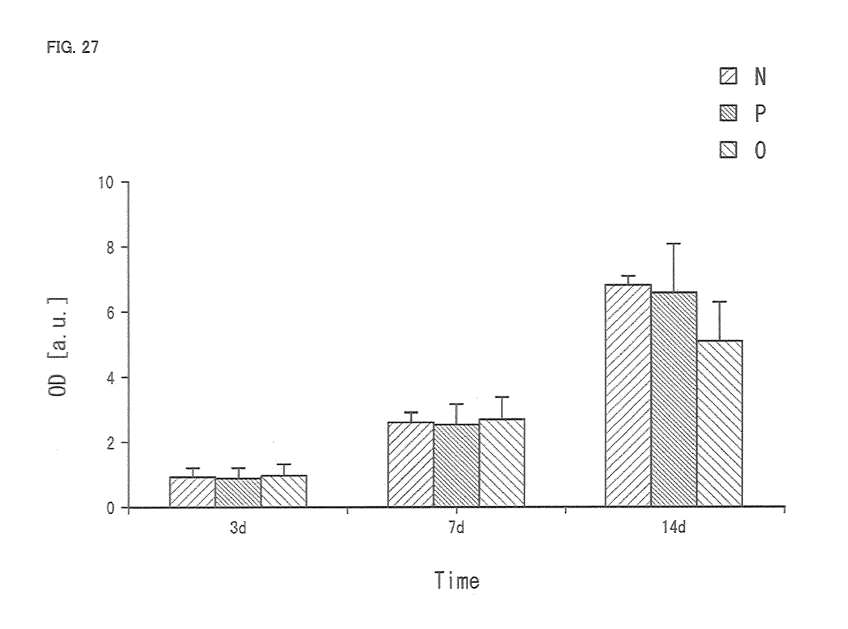

Fig. 27 is a bar graph showing the change with time (Day 3, Day 7 and Day 14) in the amount of cells grown on the respective surfaces of the polarized titanium oxide-coated disk N2, polarized titanium oxide-coated disk P2 and titanium oxide-coated disk 02. In Fig. 27, the broad bar represents the average amount of cell growth and the T-bar represents the variance in the measured values.

From Fig. 27, it is seen that the cell growth is more active on the polarized titanium oxide-coated disk N2 and the polarized titanium oxide-coated disk P2 as compared to the titanium oxide-coated disk 02.

A-14. ALP activity

The ALP activity of MG63 cells was determined using LAB ASSAY ALP KIT (manufactured by Wako Pure Chemical Industries, Ltd.) in terms of an amount based on p-nitrophenol (nmol/L). The absorbance (405 nm) was measured by MICROPLATE READER MODEL 680 manufactured by Bio-Rad Laboratories, Inc.

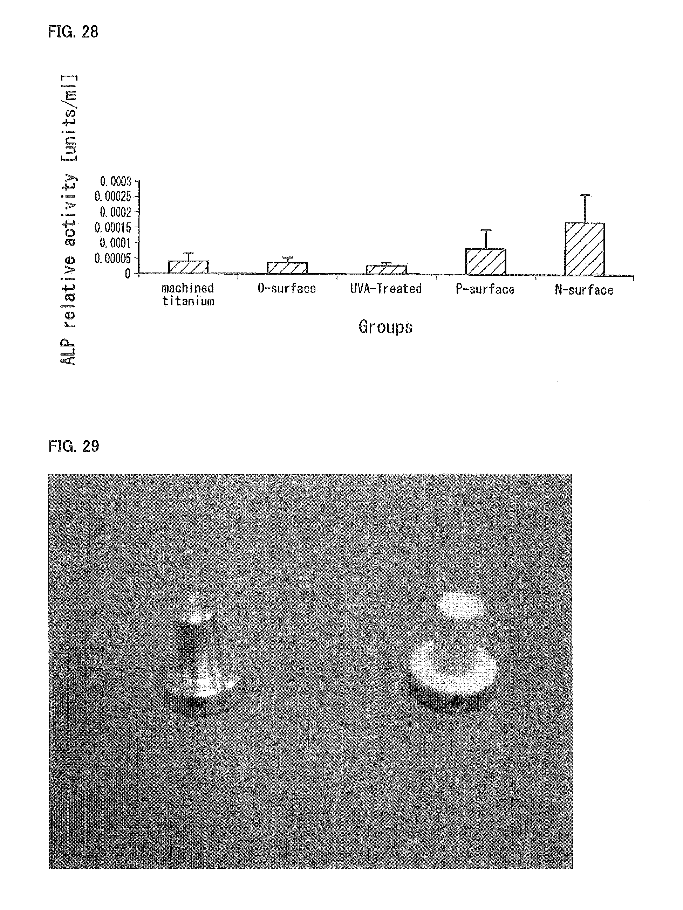

Fig. 28 is a bar graph showing the ALP activities on the respective surfaces of the original titanium disk, titanium oxide-coated disk 02, UV-treated titanium disk, polarized titanium oxide-coated disk P2 and polarized titanium oxide-coated disk N2.

From Fig. 28, it is seen that there was an increase in the ALP activity on the polarized disks and the differentiation of the MG63 osteosarcoma cells into osteoblasts was facilitated.

<B. Evaluations of biocompatible material>

[Sample preparation]

A titanium material T (the member shown in left of Fig. 29) made of pure titanium (Grade 2) was prepared. The titanium material T has a shape in which the bottom surface of the cylinder part is fused on the surface of the disk part. Specifically, the cylinder part is 3 mm in diameter and 5 mm in length and the disk part is 6 mm in diameter and 2 mm in thickness. After grinding the titanium material T with a 320# waterproof sandpaper, the resulting titanium material T was continuously ground with a 600# waterproof sandpaper to remove oxide on the surface thereof. Then, the titanium material T was ultrasonically cleaned by placing it in a solution which is a mixture of acetone, ethanol and ion-exchanged water.

The thus obtained titanium material is hereinafter referred to as "the original titanium material".

[MAO treatment of the original titanium material]

The original titanium material (used as anode) and a stainless steel plate (used as cathode) were immersed in the below-described aqueous electrolyte solution and a voltage of 400 V was applied thereto for 15 minutes (MAO treatment) to obtain a titanium material 4 in which a titanium oxide coat was formed only on the cylinder part of the original titanium material and the surface of the cylinder part side of the disk part (hereinafter, referred to as "titanium oxide-coated material"). Here, the MAO treatment was performed with cooling of the electrolytic bath such that the aqueous electrolyte solution was at a temperature of from.

-Aqueous electrolyte solution-

- 0.15 mol/mL $Ca(CH_3COO)_2$-$H_2O$
- 0.02 mol/mL $CaC_3H_7O_6P$

The above electrolytes were mixed at a ratio of 1:1 (by mass) and used as an aqueous electrolyte solution.

[Polarization treatment]

The titanium oxide-coated material 4 was disposed between two electrodes facing each other and a voltage of 1 kV/cm was applied thereto at 500°C for 2 hours. Here, a polarized titanium oxide-coated material N4 was obtained by arranging the surface of the titanium oxide-coated material 4 on which a coat was formed in contact with the anode and the other surface (the surface with exposed titanium metal) not in contact with the cathode and then applying thereto a voltage. Further, a polarized titanium oxide-coated material P4 was obtained by arranging the surface of the titanium oxide-coated material 4 on which a coat was formed in contact with the cathode and the other surface (the surface with exposed titanium metal) not in contact with the anode and then applying thereto a voltage. Fig. 29 shows a photograph of the polarized titanium oxide-coated material 4 (right).

Here, as in the case of the polarized titanium oxide-coated disks Ns and Ps, the surface of the titanium oxide coat obtained by polarizing the surface having a titanium oxide coat in contact with the anode is referred to as "N-surface" and the surface of the titanium oxide coat obtained by polarizing the surface having a titanium oxide coat in contact with the cathode is referred to as "P-surface". Further, the surface of the titanium oxide coat of the non-polarized titanium oxide-coated material is referred to as "O-surface".

-Examples 4-1 and 4-2 and Comparative Examples 4-1 and 4-2-

The thus obtained titanium oxide-coated material4, polarized titanium oxide-coated material N4 and polarized titanium oxide-coated material P4 were subjected to the following evaluations B-1 to B-3.
The polarized titanium oxide-coated material N4 was designated as Example 4-1 and the polarized titanium oxide-coated material P4 was designated as Example 4-2. Further, the non-polarized titanium oxide-coated material 4 was designated as Comparative Example 4.

[Evaluation methods and evaluation results]

B-1. TSDC measurement of the polarized titanium oxide-coated material N4

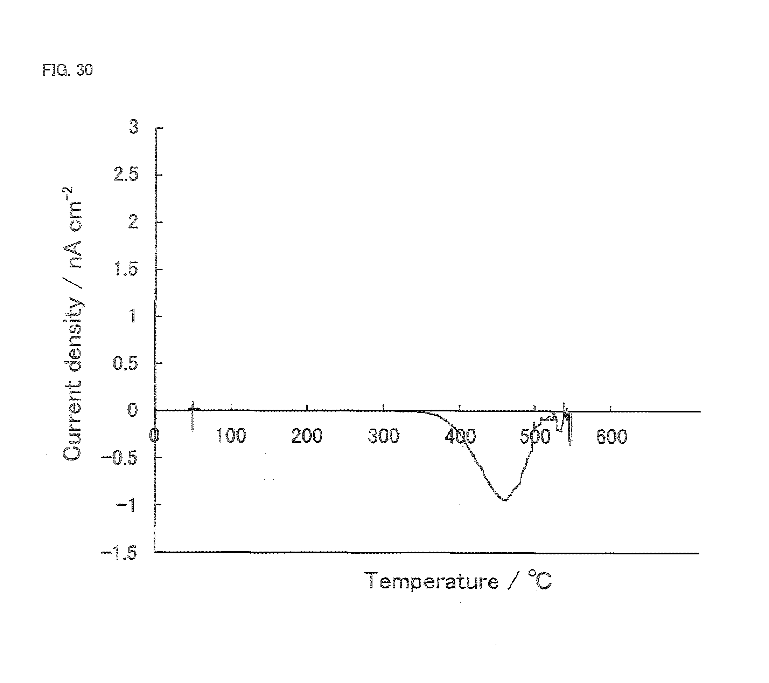

The polarized titanium oxide-coated material N4 was subjected to TSDC measurement. The TSDC measurement was performed using the same conditions and apparatus as in the TSDC measurements that were performed in the A-4 for the polarized titanium oxide coats N2 and N3. One of the platinum electrodes was cylindrical in conformity with the shape of the cylinder part and the other electrode was disk-shaped in conformity with the bottom surface of the disk part. The thus obtained TSDC spectrum is shown in Fig. 30.

B-2. Drawing test

The titanium oxide-coated material 04, the polarized titanium oxide-coated material N4, the polarized titanium oxide-coated material P4 and a UV-treated titanium material obtained by treating the original titanium material with UV radiation were implanted to a rabbit femur. Here, the UV treatment of the original titanium material was performed under the same conditions as in the case of the UV-treatment performed to obtain the UV-treated original titanium disk used in the evaluation of surface roughness in A-8.
Six weeks after the implantation of the titanium materials, each titanium material was drawn out of the femur and the force required for completing the drawing (drawing strength) was measured by EZ GRAPH-500N manufactured by Shimadzu Corporation.

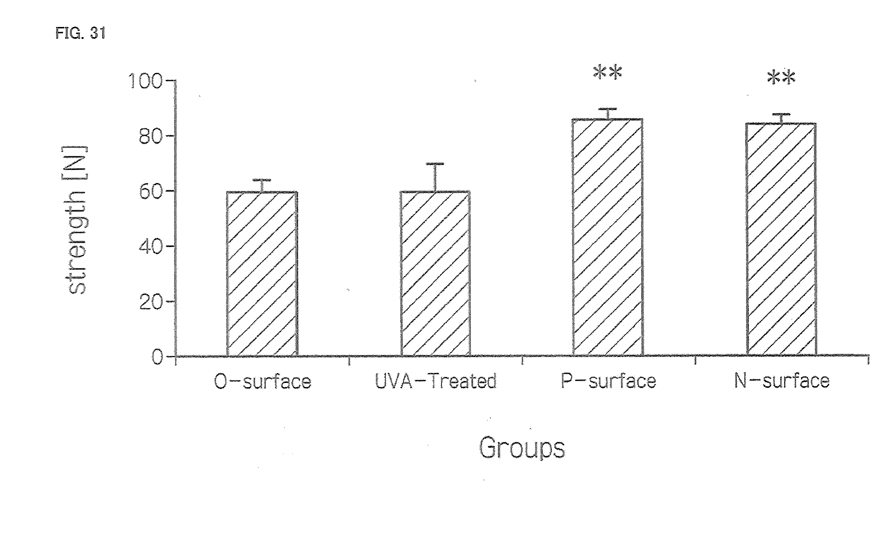

Fig. 31 shows the average values (broad bars) and variances (T-bars) of the measured strength.
In Fig. 31, "O-surface", "UVA-treated", "P-surface" and "N-surface" indicate the evaluation results for the titanium oxide-coated material 04 having an O-surface, UV-treated titanium material, polarized titanium oxide-coated material P4 having a P-surface and polarized titanium oxide-coated material N4 having an N-surface, respectively.
As seen from Fig. 31, as compared to the non-polarized titanium oxide-coated material 04 and the non-polarized UV-treated titanium material, the polarized titanium oxide-coated materials P4 and N4 required a greater drawing force; therefore, it was found that these polarized titanium oxide-coated materials were more strongly immobilized on the femur.

B-3. MicroCT analysis

After removing soft tissues from the extirpated bone as much as possible, the resulting bone was fixed with ethanol. The sample interior was three-dimensionally displayed using images scanned by a $\mu$CT manufactured by TOSHIBA Corporation (TOSCANER-30000-$\mu$C3) and the dimensions, density and porosity were measured using an analysis software TRI/3D-BON. From the thus measured values, the bone mass was calculated.

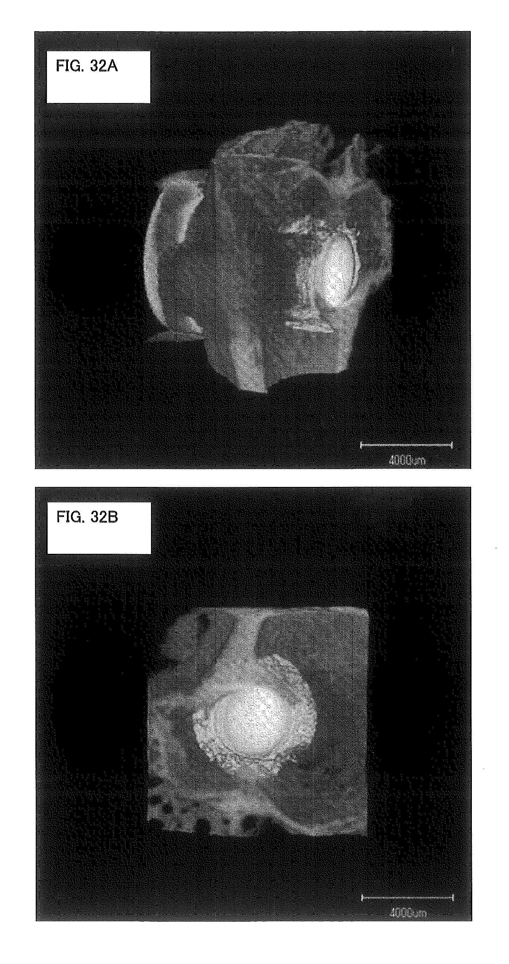

Figs. 32A and 32B are both microCT analytical images showing the polarized titanium oxide-coated material N4 implanted in a rabbit femur and the femur.

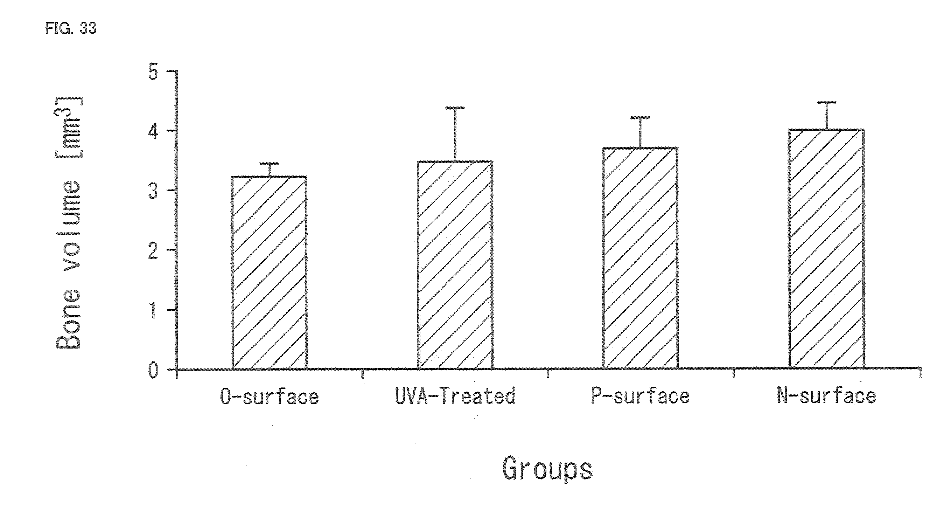

Fig. 33 is a bar graph showing respective bone volumes [mm$^3$] in the spaces between the respective surfaces of the titanium oxide-coated material 04, a UV-treated titanium material, a polarized titanium oxide-coated material P4 and a polarized titanium oxide-coated material N4 and 500 $\mu$m from the respective surfaces.

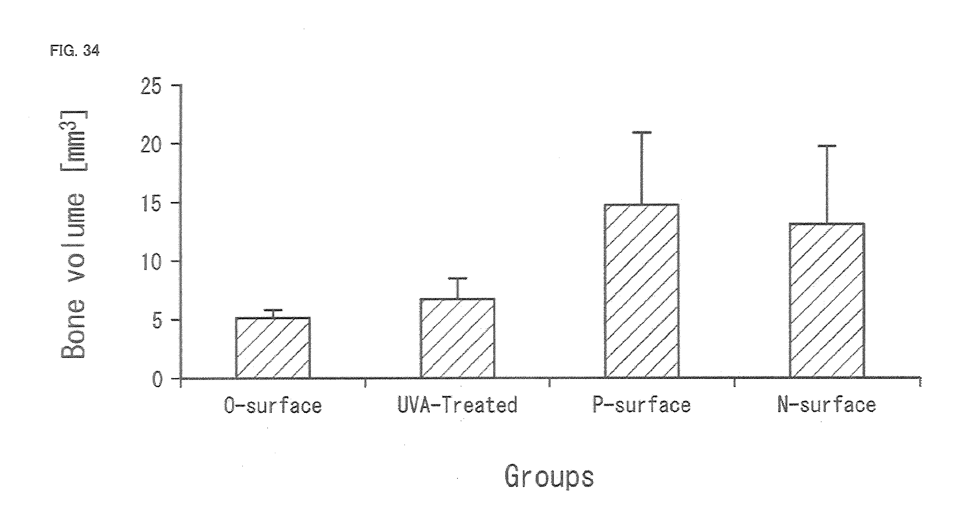

Fig. 34 is a bar graph showing respective bone volumes [mm$^3$] in the spaces between 500 $\mu$m from the respective surfaces of the titanium oxide-coated material 04, a UV-treated titanium material, a polarized titanium oxide-coated material P4 and a polarized titanium oxide-coated material N4 and 1,500 $\mu$m from the respective surfaces.
From Fig. 32, it is seen that the perimeter of the polarized titanium oxide-coated material N4 is covered with newly-formed bone. In addition, from Figs. 33 and 34, it is seen that, although the polarized titanium-oxide coated materials (P4 and N4) are not much different from the non-polarized titanium oxide-coated material 04 and UV-treated titanium material in terms of the bone volume within a space that is between the surface of each material and 500 $\mu$m

from the surface; however, the bone volume within a space that is between 500 $\mu$m from the material surface and 1,500 $\mu$m from the material surface is greater for the polarized titanium oxide-coated materials (P4 and N4), and this finding can be said to corroborate the result of the drawing test of B-2 that the polarized titanium oxide-coated materials were strongly fixed on the femur.

From the results of the "A. Evaluations of metal material" and "B. Evaluations of biocompatible material", it was found that polarized titanium oxide-coated materials have excellent hydrophilicity and that, consequently, growth and differentiation of osteoblast-like cells are improved and bone formation is thus also facilitated, so that polarized titanium oxide-coated materials are also excellent for bone bonding (direct joining of a bone and a titanium oxide-coated material).

<A2. Evaluations of metal material 2>

[Sample preparation]

After grinding the surface of a cobalt chromium alloy disk (10 mm in diameter, 2 mm in thickness) with a 320# waterproof sandpaper, the resulting disk was continuously ground with a 600# waterproof sandpaper to remove oxide on the disk surface. Then, the cobalt chromium alloy disk was ultrasonically cleaned by placing it in a solution which is a mixture of acetone, ethanol and ion-exchanged water.
The thus obtained cobalt chromium alloy disk is hereinafter referred to as "the original cobalt chromium alloy disk ".

[MAO treatment of the original cobalt chromium alloy disk]

The original cobalt chromium alloy disk (used as anode) and a stainless steel plate (used as cathode) were immersed in the below-described aqueous electrolyte solution and a voltage of 350 V was applied thereto for 15 minutes (MAO treatment) to obtain a cobalt chromium alloy disk in which a cobalt chromium alloy oxide coat was formed only on one side of the original cobalt chromium alloy disk (referred to as "cobalt chromium alloy oxide-coated disk"). Here, the MAO treatment was performed with cooling of the electrolytic bath such that the aqueous electrolyte solution was at a temperature of from room temperature to 40°C. The cobalt chromium alloy oxide coat had a thickness of about 1 $\mu$m.

-Aqueous electrolyte solution-

- 0.15 mol/mL $Ca(CH_3COO)_2$-$H_2O$
- 0.02 mol/mL $CaC_3H_7O_6P$

The above electrolytes were mixed at a ratio of 1:1 (by mass) and used as an aqueous electrolyte solution.

[Polarization treatment]

The cobalt chromium alloy oxide-coated disk was disposed between two electrodes facing each other and a voltage of 0.6 kV/cm (600 V/cm) was applied thereto at 400°C for 1 hours. Here, a polarized cobalt chromium alloy oxide-coated disk N was obtained by arranging the surface of the cobalt chromium alloy oxide-coated disk on which a coat was formed in contact with the anode and the other surface (the surface with exposed cobalt chromium alloy) not in contact with the cathode and then applying thereto a voltage. Further, polarized cobalt chromium alloy oxide-coated disk P was obtained by arranging the surface of the cobalt chromium alloy oxide-coated disk on which a coat was formed in contact with the cathode and the other surface (the surface with exposed cobalt chromium alloy) not in contact with the anode and then applying thereto a voltage.
Here, in the polarized cobalt chromium alloy oxide-coated disks, the surface of the cobalt chromium alloy oxide coat obtained by polarizing the surface having a cobalt chromium alloy oxide coat in contact with the anode is referred to as "N-surface" and the surface of the cobalt chromium alloy oxide coat obtained by polarizing the surface having a cobalt chromium alloy oxide coat in contact with the cathode is referred to as "P-surface". Further, the surface of the cobalt chromium alloy oxide coat of the non-polarized titanium oxide-coated material is referred to as "O-surface".
It is noted here that the non-polarized cobalt chromium alloy oxide-coated disk, the polarized cobalt chromium alloy oxide-coated disk N and the polarized cobalt chromium alloy oxide-coated disk P may be hereinafter simply referred to as "disk O5", "disk N5" and "disk P5", respectively.

-Examples 5-1 and 5-2 and Comparative Example 5-

The thus obtained non-polarized cobalt chromium alloy oxide-coated disk, polarized cobalt chromium alloy oxide-coated disk N and polarized cobalt chromium alloy oxide-coated disk P were subjected to the following evaluations A2-1 and A2-2.

The working example relating to the polarized cobalt chromium alloy oxide-coated disk N was designated as Example 5-1 and the working example relating to the polarized cobalt chromium alloy oxide-coated disk P was designated as Example 5-2. Further, the cobalt chromium alloy oxide-coated disk, which is a non-polarized metal oxide-coated material, was designated as Comparative Example 5.

[Evaluation methods and evaluation results]

A2-1. SBF immersion test

SBF immersion tests were carried out in the same manner as the SBF immersion tests (A-5. SBF immersion test) performed for the non-polarized titanium oxide disk 1, polarized titanium oxide disk N1 and polarized titanium oxide disk P1, except that these disks were changed to the non-polarized cobalt chromium alloy oxide-coated disk, polarized cobalt chromium alloy oxide-coated disk N and polarized cobalt chromium alloy oxide-coated disk P, respectively Hydroxyapatite precipitated on each disk after drying was observed by taking SEM image.

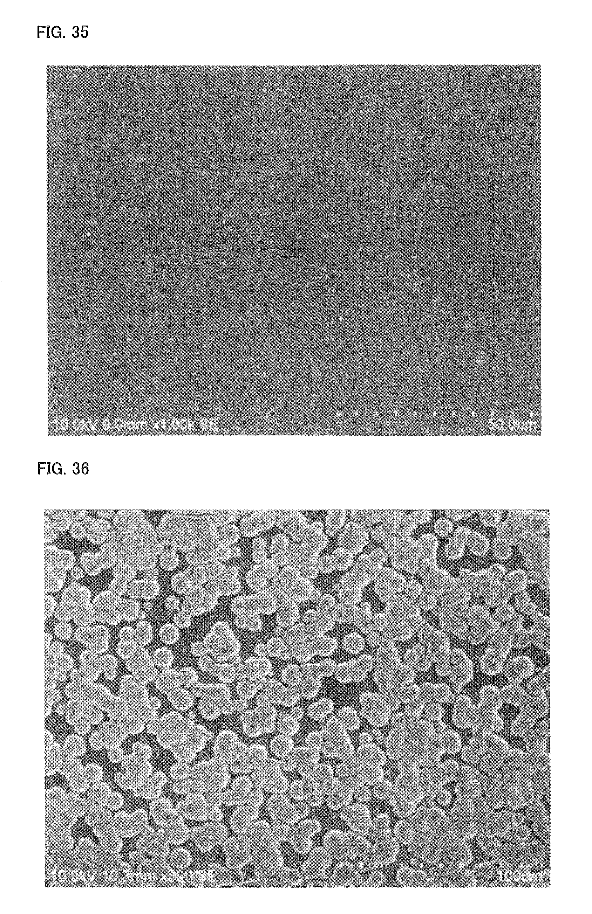

Fig. 35 shows the SEM image of the cobalt chromium alloy oxide-coated disk (O-surface; disk 05).
Fig. 36 shows the SEM image of the polarized cobalt chromium alloy oxide-coated disk N (N-surface; disk N5).

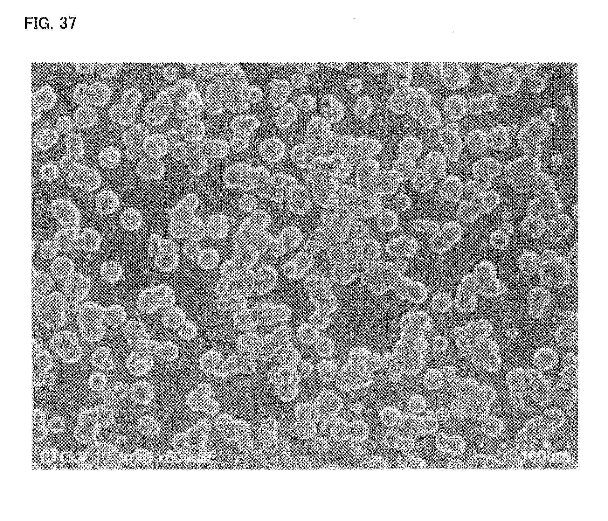

Fig. 37 shows the SEM image of the polarized cobalt chromium alloy oxide-coated disk P (P-surface; disk P5).
All of Figs. 35 to 37 show the respective disk surface at 1 week after the immersion.

From the 1-week 1.5SBF immersion tests, it was found that the apatite-forming capacities of the disks were in the order of: polarized surface of disk N5 > polarized surface of disk P5, and that this result was similar to the result for polarized apatite.

A2-2. XPS measurement of non-polarized or polarized cobalt chromium alloy oxide-coated disk

XPS measurements of the cobalt chromium alloy oxide-coated disk, polarized cobalt chromium alloy oxide-coated disk N and polarized cobalt chromium alloy oxide-coated disk P were performed in the same manner as the XPS measurement performed on the polarized titanium oxide-coated disk 2 (A-7. XPS measurement of the polarized titanium oxide-coated disk 2), except that the cobalt chromium alloy oxide-coated disk, the polarized cobalt chromium alloy oxide-coated disk N or the polarized cobalt chromium alloy oxide-coated disk P was used in place of the polarized titanium oxide-coated disk 2.

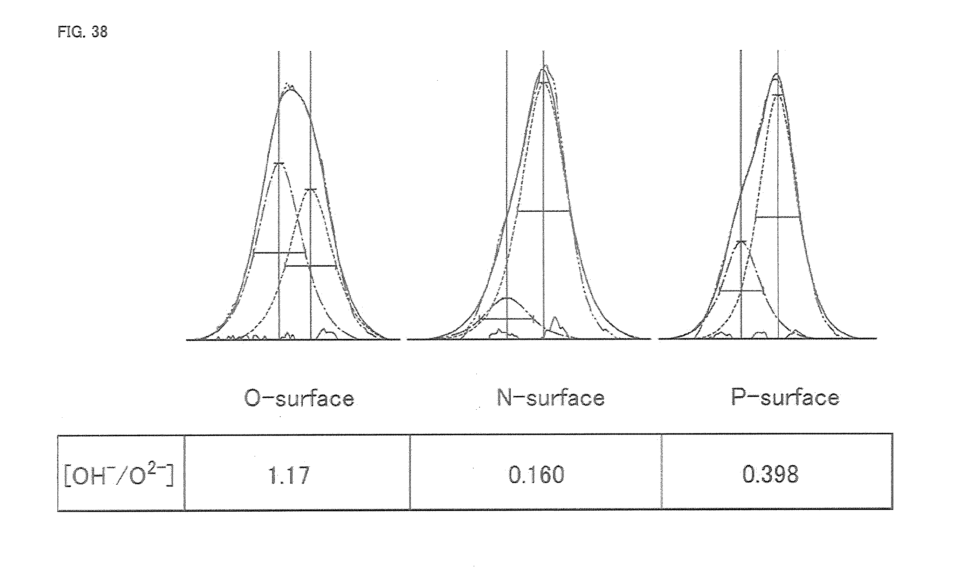

Fig. 38 shows the thus obtained XPS spectra.
In Fig. 38, from the left, the results of the XPS measurement for the O-surface (disk 05), N-surface (disk N5) and P-surface (disk P5) are shown. The abscissa and ordinate of the graph showing the XPS spectra are the same as in Fig. 16. That is, the abscissa indicates the bonding energy [ev] of each ion and the ordinate indicates the intensity [a.u.].

All of the XPS spectra are indicated with the peaks being separated for $O^{2-}$ [dashed line (----)] and $OH^-$ [dot and dash line (-•-•-•-)]. The peak heights indicate the bonding energy and the amount of $O^{2-}$ and $OH^-$ present on the respective disk surfaces. The $O^{2-}$ represents the presence of elemental oxygen originated from the cobalt chromium alloy oxide which is a metal oxide present on the disk surface. The $OH^-$ represents the presence of elemental oxygen originated from the OH groups present on the disk surface. Since $OH^-$ was detected with large peaks, it is understood that the disk surfaces were in a condition of easily forming hydrogen bonds with water molecules, that is, hydrophilic.

Here, the "$OH^-/O^{2-}$" shown below the XPS curves indicates the intensity ratio of the $OH^-$ peak and the $O^{2-}$ peak.

From the XPS curves shown in Fig. 38, it was found that oxidation was advanced by polarization of the cobalt chromium alloy oxide in the order of P-surface < N-surface.

By the evaluations A2-1 and A2-2, it was found that a cobalt chromium alloy can also be polarized in the same manner as in the case of titanium and is useful as a biocompatible material.

Description of Symbols

10:  Plate electrode
20:  Plate electrode
30:  Discoid sample

| 40: | Direct-current power source |
| 50: | Non-conductive member |
| 100: | Electrode |
| 110: | Electrode |
| 120: | Sample |
| 120A: | Threaded part |
| 120B: | Base |
| 400: | Direct-current power source |

The disclosure of Japanese Patent Application No. 2010-015963 is hereby incorporated by reference in its entirety.

All the documents, patent applications and technical standards described in the present specification are hereby incorporated by reference to the same extent as in cases where each document, patent application or technical standard is concretely and individually described to be incorporated by reference.

**Claims**

1. A crystalline metal oxide comprising a positive charge-induced region and a negative charge-induced region, a surface of the crystalline metal oxide having protrusions and recesses or being porous.

2. The metal oxide according to claim 1, wherein a metal which configures the metal oxide is an elemental metal or an elemental metal-containing alloy.

3. The metal oxide according to claim 2, wherein the metal which configures the metal oxide is titanium, zirconium, titanium alloy, zirconium alloy or cobalt chromium alloy.

4. The metal oxide according to claim 2, wherein the metal which configures the metal oxide is oxidized by an anodic oxidation treatment.

5. A metal material comprising the metal oxide of claim 1 on at least a part of a surface of a metal.

6. The metal material according to claim 5, wherein the metal and the metal which configures the metal oxide are the same metal.

7. The metal material according to claim 5, wherein the metal oxide is an oxide coat formed on the surface of the metal.

8. A biocompatible material comprising the metal oxide of claim 1 or the metal material of claim 5.

9. A method of producing a metal oxide, the method comprising:

    a metal oxide formation step in which a metal is oxidized to form a metal oxide on at least a part of the metal; and
    a polarization step in which the metal oxide is polarized by disposing the metal oxide between a first electrode which functions as a positive electrode and a second electrode which functions as a negative electrode and applying thereto a voltage so that a positive charge-induced region and a negative charge-induced region are formed on the metal oxide.

10. The method of producing a metal oxide according to claim 9, wherein a metal is oxidized by microarc anodic oxidation treatment in the metal oxide formation step.

11. The method of producing a metal oxide according to claim 9, which produces a crystalline metal oxide having a surface having protrusions and recesses or a porous surface.

12. The method of producing a metal oxide according to claim 9, wherein, in the polarization step, a voltage is applied to the first electrode and the second electrode with the metal oxide being not in contact with at least one of the first electrode or the second electrode, such that an electric field gradient of 0.5 kV/cm or more is formed between the first electrode and the second electrode.

**13.** The method of producing a metal oxide according to claim 9, wherein, in the polarization step, the metal oxide is not in contact with one of the first electrode and the second electrode and the metal is in contact with the other electrode.

**14.** The method of producing a metal oxide according to claim 9, wherein the metal is an elemental metal or an elemental metal-containing alloy.

**15.** The method of producing a metal oxide according to claim 9, wherein the metal is titanium, zirconium, titanium alloy, zirconium alloy or cobalt chromium alloy.

FIG. 1A

20  30  X  40

10

FIG. 1B

20  30  40

10

FIG. 1C

20  30  50  40

10

FIG. 2

FIG. 3A

FIG. 3B

FIG. 3C

FIG. 4

FIG. 5

FIG. 6

EP 2 532 621 A1

FIG. 7

EP 2 532 621 A1

FIG. 8

FIG. 9A

350V

FIG. 9B

400V

FIG. 9C

450V

FIG. 10A

350V, 14days

FIG. 10B

400V, 7days

FIG. 10C

450V, 14days

FIG. 11

FIG. 12A

FIG. 12B

FIG. 12C

FIG. 13A

FIG. 13B

FIG. 14

FIG. 15

Bonding energy/eV

FIG. 16

FIG. 17

FIG. 18

EP 2 532 621 A1

FIG. 19A
Ti SURFACE

FIG. 19B
UVA SURFACE

FIG. 20A
O-SURFACE

FIG. 20B
P-SURFACE

FIG. 20C
N-SURFACE

FIG. 21A
Ti SURFACE

1 0 mm

FIG. 21B
UVA SURFACE

1 0 mm

FIG. 22A
O-SURFACE

FIG. 22B
P-SURFACE

FIG. 22C
N-SURFACE

FIG. 23

FIG. 24

EP 2 532 621 A1

FIG. 25A
O-SURFACE

FIG. 25B
N-SURFACE

FIG. 25C

P-SURFACE

FIG. 26A
O-SURFACE

FIG. 26B
N-SURFACE

FIG. 26C
P-SURFACE

FIG. 27

EP 2 532 621 A1

FIG. 28

FIG. 29

FIG. 30

EP 2 532 621 A1

FIG. 31

FIG. 32A

FIG. 32B

FIG. 33

FIG. 34

EP 2 532 621 A1

FIG. 35

FIG. 36

FIG. 37

EP 2 532 621 A1

FIG. 38

| | O-surface | N-surface | P-surface |
|---|---|---|---|
| $[OH^-/O^{2-}]$ | 1.17 | 0.160 | 0.398 |

<table>
<tr><td colspan="2" align="center">**INTERNATIONAL SEARCH REPORT**</td><td colspan="2">International application No.<br>PCT/JP2011/051672</td></tr>
</table>

**A. CLASSIFICATION OF SUBJECT MATTER**

*C01B13/14*(2006.01)i, *C25D11/26*(2006.01)i, *A61K6/00*(2006.01)n, *A61L27/00*(2006.01)n, *C01G23/04*(2006.01)n, *C01G25/02*(2006.01)n

According to International Patent Classification (IPC) or to both national classification and IPC

**B. FIELDS SEARCHED**

Minimum documentation searched (classification system followed by classification symbols)
C01B13/14, C25D11/26, A61K6/00, A61L27/00, C01G23/04, C01G25/02

Documentation searched other than minimum documentation to the extent that such documents are included in the fields searched
Jitsuyo Shinan Koho 1922-1996 Jitsuyo Shinan Toroku Koho 1996-2011
Kokai Jitsuyo Shinan Koho 1971-2011 Toroku Jitsuyo Shinan Koho 1994-2011

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
|---|---|---|
| X | YU, L. et al, Fabrication of lithium-doped zinc oxide film by anodic oxidation and its ferroelectric behavior, Materials Research Bulletin, 2009.03.05, Vol.44, No.3, p.589-593, doi:10.1016/j.materresbull.2008.07.003 | 1,2,4-7,9, 11-14 |
| X | JP 2006-285031 A (Sony Corp.), 19 October 2006 (19.10.2006), paragraphs [0016], [0018] & US 2006/0221458 A1 & EP 1708006 A1 & KR 10-2006-0105578 A & CN 1841095 A | 1-15 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>19 April, 2011 (19.04.11) | Date of mailing of the international search report<br>10 May, 2011 (10.05.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2011/051672 |

C (Continuation).   DOCUMENTS CONSIDERED TO BE RELEVANT

| Category* | Citation of document, with indication, where appropriate, of the relevant passages | Relevant to claim No. |
|---|---|---|
| X | WO 2007/108450 A1  (Independent Administrative Institution National Institute for Materials Science), 27 September 2007 (27.09.2007), claims 1, 5; examples 1, 4 & US 2009/0131540 A1     & EP 1997522 A1 | 1,2,4-8 |
| X Y | JP 2001-187133 A  (Yugen Kaisha Nature Material), 10 July 2001 (10.07.2001), paragraph [0022]; fig. 15; paragraph [0025] & US 6777214 B1          & EP 1038539 A2 | 1,5,8 1-15 |
| Y | JP 2005-508862 A  (Mediteam Dental AB.), 07 April 2005 (07.04.2005), claims 1, 9, 14; paragraph [0026]; examples 15, 16 & US 2004/0149586 A1     & EP 1397168 A1 & WO 2002/096475 A1 | 1-15 |
| Y | JP 11-43799 A  (Nikon Corp.), 16 February 1999 (16.02.1999), claim 1; paragraph [0006] (Family: none) | 1-15 |
| Y | Kimihiro YAMASHITA et al., "Induction Processing of Electrical Polarization in Electrovector Bioceramics", Ceramics, 01 March 2005 (01.03.2005), vol.40, no.3, pages 163 to 167, ISSN:0009-031X | 1-15 |
| A | WO 2005/012599 A1  (Kaneka Corp.), 10 February 2005 (10.02.2005), entire text & US 2006/0181835 A1     & US 2008/0304208 A1 & EP 1650328 A1          & WO 2005/012599 A1 & KR 10-2006-0039924 A   & CN 1829828 A | 1-15 |

Form PCT/ISA/210 (continuation of second sheet) (July 2009)

<div align="center">**INTERNATIONAL SEARCH REPORT**</div>

| International application No. |
| --- |
| PCT/JP2011/051672 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:

    The invention in claim 1 does not have novelty and a special technical feature since the invention is described in the following documents 1 - 4, and consequently, the invention in claim 1 does not comply with the requirement of unity.
    The inventions in claims as indicated below are relevant to main invention.
    Claims 1 - 4

                                        (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2011/051672 |

Continuation of Box No.III of continuation of first sheet(2)


Document 1: YU, L. et al, Fabrication of lithium-doped zinc oxide
            film by anodic oxidation and its ferroelectric behavior,
            Materials Research Bulletin, 2009.03.05, Vol.44, No.3,
            p.589-593,
Document 2: JP 2006-285031 A (Sony Corp.), 19 October 2006 (19.10.2006),
Document 3: WO 2007/108450 A1 (Independent Administrative Institution
            National Institute for Materials Science), 27 September
            2007 (27.09.2007),
Document 4: JP 2001-187133 A (Yugen Kaisha Nature Material), 10 July
            2001 (10.07.2001),

Form PCT/ISA/210 (extra sheet) (July 2009)

EP 2 532 621 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001187133 A
- JP 2002335947 A
- JP 2003300712 A
- JP 10324584 A
- JP 11043799 A
- JP 2010015963 A